# EUROPÄISCHE PATENTANMELDUNG

(11) **EP 2 859 873 A1**
(43) Veröffentlichungstag der Anmeldung: **15.04.2015**
(21) Anmeldenummer: 14189960.9
(22) Anmeldetag: 09.01.2014
(51) Int. Cl.: A61H 9/00, H02J 7/00

(54) **Fitnessgerät**

(30) Priorität: 31.01.2013 DE 102013101007; 31.01.2013 US 201361759049 P
(62) Teilanmeldung aus: 14700187.9
(71) Anmelder: Airpressure Bodyforming GmbH, 83471 Berchtesgaden (DE)
(72) Erfinder: Die Erfindernennung liegt noch nicht vor
(74) Vertreter: Flügel Preissner Kastel Schober

(57) **Zusammenfassung**

Ein Fitnessgerät umfasst eine Tragevorrichtung (10) zum Tragen einer Pumpeinrichtung (16) an einem Körperteil einer Person. Die Tragevorrichtung umfasst einen Grundkörper (60), der ein erstes Ende (68) und ein zweites Ende (62) aufweist, ein Verbindungsmittel, das geeignet ist, das erste Ende (68) und das zweite Ende (62) miteinander zu verbinden, und ein Haltemittel (64) zum lösbaren Befestigen der Pumpeinrichtung (16) an dem Grundkörper (60).

Ein Verfahren zur Steurerung eines solchen Fitnessgerätes umfasst die folgenden Verfahrensschritte:
a) Öffnen des ersten Ventils (86a);
b) Betätigen des Kompressors (84), während das erste Ventil (86a) geöffnet ist;
c) Anhalten des Kompressors (84), sobald der Druck des Fluids in der ersten Druckkammer (26) einen vorgegebenen Druck erreicht;
d) Öffnen des zweiten Ventils (86b);
e) Verschließen des ersten Ventils (86a);
f) Betätigen des Kompressors (84) während das zweite Ventil (86b) geöffnet ist;
g) Anhalten des Kompressors (84), sobald der Druck des Fluids in der zweiten Druckkammer (28) den vorgegebenen Druck erreicht;
h) Öffnen des ersten Ventils (86a) und
i) Verschließen des zweiten Ventils (86b).

## Beschreibung

Die vorliegende Erfindung betrifft ein Fitnessgerät mit einem Druckgürtel zur Beaufschlagung eines Körperteils einer Person mit Druck und einer Tragevorrichtung zum Tragen einer Pumpvorrichtung an dem Körperteil.

EP 1 248 586 B1 und WO 01/52787 A2 betreffen ein Fitnessgerät in Form eines Bekleidungsstücks, bei dem zwingend eine Unterdruckkammer vorgesehen ist.

Aus EP 1 307 168 B1 ist ein Trainingsgerät bekannt, das eine Trainingsvorrichtung mit einem starren Gehäuse darstellt, in dem ebenfalls ein Unterdruck erzeugbar ist.

Weiterhin ist aus WO 03/030808 A und US 2005/0070405 A1 bekannt, ein Fitnessgerät in Form einer Manschette aufzubauen, die mehrere Luftkammern aufweist, die abwechselnd mit Überdruck und mit Unterdruck beaufschlagbar sind. Die Luftkammern werden dabei über getrennte Zuleitungen versorgt, über die periodisch Luft zugeführt beziehungsweise abgesaugt wird.

Aufblasbare Kompressen sind aus WO 04/084790 A, US 2005/0187500 A, US 3,920,006 und US 2002/00442583 A1 bekannt. Bei diesen Vorrichtungen handelt es sich jedoch um medizinische Geräte zur Wundbehandlung, die insbesondere bei Ödemen, Durchblutungsstörungen oder Knochenbrüchen Anwendung finden.

Solche Trainingsgeräte sind relativ aufwändig und in ihrem Einsatzbereich beschränkt, da mit vertretbarem Aufwand nur eine bestimmte Arbeitsfrequenz erzielt werden kann. Vorzugsweise ist in diesem Fall eine persönliche Betreuung notwendig, die in Fitness- und Freizeitbetrieben anzutreffen ist.

WO 00/72797 A1, WO 2006/0033114 A2 und US 2012/0065561 A1 beschreiben Vorrichtungen zur Thromboseprophylaxe. Die Vorrichtungen weisen jeweils aufblasbare Kammern auf, welche am Bein oder am Fuß eines Patienten angelegt werden. WO 2005/016218 A1 beschreibt ebenfalls eine Vorrichtung zur Thromboseprophylaxe, welche sich aus einem Gürtel, einem Gehäuse für eine Pumpeinrichtung und Beinmanschetten zusammensetzt. US 2012/0022416 A1 beschreibt eine Vorrichtung zur Förderung des Blutflusses in Beinen.

**Aufgabe** der vorliegenden Erfindung ist es, ein Fitnessgerät der eingangs genannten Art zu verbessern.

Die genannte Aufgabe wird durch das Fitnessgerät nach Anspruch 1 **gelöst**.

Das Fitnessgerät umfasst eine Tragevorrichtung zum Tragen einer Pumpeinrichtung an einem Körperteil einer Person. Die Trageeinrichtung umfasst einen Grundkörper, der ein erstes Ende und ein zweites Ende aufweist, ein Verbindungsmittel, das geeignet ist das erste Ende und das zweite Ende miteinander zu verbinden, und ein Haltemittel zum lösbaren Befestigen der Pumpeinrichtung an dem Grundkörper. Der Grundkörper weist eine dem Körperteil zugewandte Innenseite und eine dem Körperteil abgewandte Außenseite auf.

Das Fitnessgerät dient zur Intensivierung der Fettverbrennung in einem Körperteil einer Person durch die Anregung der Durchblutung in diesem Körperteil. Vorteilhafterweise weist die Person dabei einen Puls im Fettverbrennungsbereich auf. Dies kann beispielsweise dadurch erreicht werden, dass die Person während der Verwendung der erfindungsgemäßen Vorrichtung ein Ausdauertraining (beziehungsweise Fettverbrennungstraining) auf einem entsprechenden Trainingsgerät ausführt.

Die Pumpeinrichtung ist vorzugsweise eine solche Pumpeinrichtung, wie sie später beschrieben wird. Der Körperteil, an dem die Tragevorrichtung angebracht werden soll, kann vorzugsweise der Rumpf, insbesondere der Bauchbereich der Person, sein. Der Grundkörper ist beispielsweise wie ein längliches Band ausgebildet. Durch Verbinden des ersten Endes mit dem zweiten Ende kann die Tragevorrichtung an dem Körperteil der Person durch Umschließen befestigt werden, so dass die Person die Pumpeinrichtung stets bei sich tragen kann. Mittels des Haltemittels kann die Pumpeinrichtung an dem Grundkörper befestigt werden, so dass die Pumpeinrichtung durch die Tragevorrichtung gehalten wird. Das Haltemittel kann lösbar oder fest an dem Grundkörper angebracht sein.

Es ist bevorzugt, dass das Haltemittel auf der Innenseite angeordnet ist und vorzugsweise als eine verschließbare Tasche ausgebildet ist. Durch die Anordnung des Haltemittels an der Innenseite, kann die Pumpeinrichtung derart mittels der Tragevorrichtung von der Person getragen werden, dass die Pumpeinrichtung nicht sichtbar ist. Ferner müssen Leitungen, die von der Pumpeinrichtung wegführen und zum Beispiel an einem Druckgürtel, so wie er im Folgenden beschrieben wird, angeschlossen werden, nicht um den Gürtel herumgeführt werden. Durch die bevorzugte Ausbildung des Haltemittels als eine verschließbare Tasche kann die Pumpeinrichtung schnell und einfach an der Tragevorrichtung fixiert werden.

Es ist bevorzugt, dass das Haltemittel eine erste Öffnung und eine zweite Öffnung aufweist, wobei vorzugsweise die zweite Öffnung der ersten Öffnung gegenüberliegend angeordnet ist. Die beiden Öffnungen dienen vorzugsweise dazu, einen Zugang zu der Pumpeinrichtung zu schaffen. Beispielsweise kann mittels der ersten Öffnung eine Bedieneinrichtung, wie beispielsweise ein Schalter, an der Pumpeinrichtung bedient werden. Ferner können Leitungen, die von der Pumpeinrichtung wegführen, über die zweite Öffnung aus dem Haltemittel herausgeführt werden, so dass das Haltemittel geschlossen werden kann, was wiederum eine sichere Fixierung der Pumpeinrichtung ermöglicht.

Es ist bevorzugt, dass der Grundkörper an der Innenseite wenigstens eine Lasche aufweist. Die Lasche dient vorzugsweise dazu, die Leitungen der Pumpeinrichtung zu halten und damit auch zu führen. Ferner lässt sich auch ein Verrutschen der Leitungen vermeiden, was zum einen für die Person als störend empfunden werden kann und zum anderen auch zum Ablösen der Leitungen von der Pumpeinrichtung oder dem Druckgürtel führen kann.

Es ist bevorzugt, dass der Grundkörper und/oder das Haltemittel und/oder die Lasche aus einem textilen, insbesondere atmungsaktiven Material gefertigt sind, das vorzugsweise elastisch ist und weiter vorzugsweise Neopren umfasst. Der Grundkörper, das Haltemittel und die Lasche können aus dem gleichen Material gefertigt sein oder aus unterschiedlichen Materialien. Wird ein elastisches Material verwendet, erhöht dies vorzugsweise die Bewegungsfreiheit der Person, die die Tragevorrichtung trägt. Insbesondere, wenn das Haltemittel aus einem elastischen Material hergestellt ist, lässt sich die Pumpeinrichtung durch die Elastizität des Haltemittels sicher fixieren, da die Spannung des elastischen Materials eine höhere Haltekraft zum Halten der Pumpeinrichtung erzeugen kann. Bevorzugt ist das Material Neopren.

Es ist bevorzugt, dass das Verbindungsmittel ein Hakenband, das an der Innenseite im Bereich des ersten Endes angeordnet ist, und ein Flauschband, das an der Außenseite im Bereich des zweiten Endes angeordnet ist, aufweist, wobei zum Verbinden des ersten Endes und des zweiten Endes das Hakenband mit dem Flauschband in Eingriff bringbar ist. Das Hakenband weist vorzugsweise eine Vielzahl von Haken, insbesondere Widerhaken oder Pilzköpfe, auf, die sich mit dem Flauschband, das vorzugsweise eine Vielzahl von verkräuselten Fäden aufweist, verhakt. Ein Beispiel für das Verbindungsmittel ist ein Klettverschluss. Vorzugsweise erstreckt sich das Flauschband über einen ausgedehnten Bereich, so dass die Tragevorrichtung an Körperteile verschiedenster Abmessungen angepasst werden kann.

Es ist bevorzugt, dass der Grundkörper an der Außenseite zumindest bereichsweise mit einem weiteren Flauschband versehen ist. Vorzugsweise erstreckt sich das weitere Flauschband über den Großteil der Außenseite des Grundkörpers, und mehr vorzugsweise ist das Flauschband des Verbindungsmittels am zweiten Ende des Grundkörpers kontinuierlich mit dem weiteren Flauschband ausgebildet.

Es ist bevorzugt, dass das Fitnessgerät ferner eine Halterung zum Befestigen eines Gegenstands, insbesondere einer Medienwiedergabeeinrichtung, an dem Grundkörper aufweist, wobei vorzugsweise die Halterung aus einem textilen, insbesondere elastischen, Material gefertigt ist, das vorzugsweise Neopren umfasst. Der Gegenstand kann beispielsweise ein MP3-Player oder ein Mobiltelefon sein. Wenn das Material der Halterung aus elastischem Material gefertigt ist, kann der Gegenstand durch die beim Einfügen erzeugte Spannung sicher in der Halterung fixiert werden.

Es ist bevorzugt, dass die Halterung lösbar an dem Grundkörper befestigt ist, wobei vorzugsweise die Halterung ein zweites Hakenband zur lösbaren Befestigung an dem Flauschband der Tragevorrichtung aufweist. Wenn das weitere Flauschband des Grundkörpers sich über einen großen Bereich der Tragevorrichtung erstreckt, kann die Halterung örtlich variabel an der Tragevorrichtung befestigt werden. Auch hier kann die lösbare Befestigung ein Klettverschluss zwischen dem Grundkörper und der Halterung sein. Erfindungsgemäß ist ein Druckgürtel zur Beaufschlagung eines Körperteils einer Person mit Druck vorgesehen. Der Druckgürtel weist wenigstens eine erste Druckkammer, die mit einem Fluid beaufschlagbar ist, eine erste Anschlusseinrichtung, die einen ersten Anschlussbereich aufweist und mit der ersten Druckkammer verbunden ist, eine Pumpeinrichtung, die geeignet ist, die erste Druckkammer mit dem Fluid zu beaufschlagen, eine erste Leitung, welche die erste Druckkammer mit der Pumpeinrichtung verbindet und ein erstes Endstück hat, und eine Steuereinrichtung zum Steuern der Pumpeinrichtung auf, wobei der erste Anschlussbereich und das erste Endstück einen fluiddichten ersten Schnellverschluss bilden und wobei die erste Anschlusseinrichtung abgewinkelt ist.

Der Druckgürtel liegt vorzugsweise eng an dem Körperteil an. Das Fluid ist vorzugsweise ein Gas oder ein Gasgemisch, weiterhin vorzugsweise Luft. Die Pumpeinrichtung kann die erste Druckkammer mit dem Fluid aufpumpen, so dass sich die erste Druckkammer wölbt und einen Druck auf das Köperteil der Person ausübt. Der dazu verwendete Druck kann auch als Arbeitsdruck bezeichnet werden.

Die Pumpeinrichtung kann mittels der Trageeinrichtung getragen werden. Die Tragevorrichtung kann auf dem Druckgürtel angeordnet werden. Wird die Tragevorrichtung über dem Druckgürtel angeordnet, kann der auf das Körperteil ausgeübte Druck noch weiter erhöht werden, da der von dem Druckgürtel aufgebrachte Druck nicht länger in eine von dem Körperteil wegweisende Richtung wirken kann. Beispielsweise liegt der Druckgürtel an dem Rumpf, insbesondere dem Bauch, des Trägers an.

Über die Steuereinrichtung wird die Druckbeaufschlagung der ersten Druckkammer gesteuert. Beispielsweise kann eine periodische Druckbeaufschlagung, eine kontinuierliche Druckbeaufschlagung oder eine zwischen diesen Zuständen abwechselnde Druckbeaufschlagung vorgesehen sein. Die Pumpeinrichtung kann auch das Fluid aus der ersten Druckkammer abpumpen.

Der Schnellverschluss kann beispielsweise ein im Bereich von Druckleitungen üblicher Schnellverschluss sein. Der Schnellverschluss kann beispielsweise aus Metall hergestellt sein, während die erste Leitung biegsam und/oder aus einem Kunststoff herstellt ist. Durch die abgewinkelte Ausbildung der Anschlusseinrichtung steht die Anschlusseinrichtung nicht weit von dem Gürtel hervor, was den Tragekomfort des Druckgürtels erhöhen kann, da die Anschlusseinrichtung nicht so weit von dem Körperteil vorsteht. Ferner können sich mit der abgewinkelten Ausgestaltung der Anschlusseinrichtungen vermeiden lassen, dass die Leitungen direkt hinter der Anschlusseinrichtung knicken, was insbesondere dann geschieht, wenn auf dem Druckgürtel die Tragevorrichtung angeordnet ist oder Kleidung über dem Druckgürtel getragen wird. Auch ein versehentliches Abziehen der Leitungen von dem Druckgürtel kann vermieden werden, da die Leitung nicht in Abziehrichtung verläuft.

Es ist bevorzugt, dass der Druckgürtel ferner eine zweite Druckkammer, die mit dem Fluid beaufschlagbar ist, eine zweite Anschlusseinrichtung, die einen zweiten Anschlussbereich aufweist und mit der zweiten Druckkammer verbunden ist, eine zweite Leitung, bei der die zweite Druckkammer mit der Pumpeinrichtung verbindbar und ein zweites Endstück hat, aufweist. Die Pumpeinrichtung ist vorzugsweise dazu geeignet, die Druckkammer mit dem Fluid zu beaufschlagen, wobei der zweite Abschlussbereich und das zweite Endstück einen fluiddichten zweiten Schnellverschluss bilden, und wobei vorzugsweise die zweite Anschlusseinrichtung abgewinkelt ist. Hinsichtlich der zweiten Druckkammer, der zweiten Anschlusseinrichtung, der zweiten Leitung und des zweiten Anschlussbereichs gelten vorzugsweise die zu dem jeweiligen ersten gemachten Äußerungen. Insbesondere können die erste und zweite Leitung und/oder die erste und zweite Druckkammer und/oder der erste und zweite Anschlussbereich ähnlich oder identisch hergestellt sein.

Die Pumpeinrichtung kann einzelne Pumpen aufweisen, die die erste und zweite Druckkammer jeweils mit individuellem Druck beaufschlagen. Es ist ferner bevorzugt, dass die Pumpeinrichtung eine mobile Stromversorgung für die Pumpe hat, wie beispielsweise eine wiederaufladbare Batterie. Alternativ kann die Pumpeinrichtung nicht an der Tragevorrichtung sondern an einem Befestigungsmittel befestigt sein, wie es weiter unten beschrieben wird.

Es ist ferner bevorzugt, dass die Kammern vorzugsweise eine doppelwandige, abschnittsweise flexible, fluidundurchlässige Hülle aufweisen.

Der erste und zweite Anschlussbereich kann aus einem Metall, insbesondere Messing, hergestellt sein, während der nicht mehr zu dem Anschlussbereich gehörende Teil der Anschlusseinrichtung aus Kunststoff hergestellt sein kann.

Vorzugsweise ist eine Seite der Hülle im Vergleich zur anderen Seite der Hülle elastischer ausgestaltet. Die weniger elastische Seite der Hülle wölbt sich daher beim Aufbauen eines Drucks in der Kammer weniger weit aus als die elastischere Seite der Hülle. Insbesondere ist die elastischere Seite der Hülle dem Körper des Trägers zugewandt, sodass sich der durch den Druck in den Kammern aufgebaute Anpressdruck auf den Körper des Trägers besonders gut überträgt. Die elastischere Seite der Hülle kann beispielsweise im Vergleich zu der weniger elastischen Seite der Hülle dünner aber mit gleichem Material ausgestaltet sein. Ferner ist es möglich, die elastischere Seite durch ein Material bereitzustellen, dass im Vergleich zu der elastischeren Seite der Hülle elastischer ist.

Es ist bevorzugt, dass die erste Anschlusseinrichtung und/oder die zweite Anschlusseinrichtung im Wesentlichen um 90° abgewinkelt sind. Dies stellt eine für den Träger besonders komfortable Ausgestaltung der Anschlusseinrichtungen dar, da die Anschlusseinrichtungen kaum von dem Druckgürtel hervorstehen. Insbesondere sind die erste Anschlusseinrichtung und die zweite Anschlusseinrichtung gleich ausgebildet.

Es ist bevorzugt, dass der Gürtel einen ersten Endbereich, einen zweiten Endbereich und einen Verschluss, der zum Verbinden des ersten Endbereichs und des zweiten Endbereichs dient, aufweist, wobei vorzugsweise der Verschluss als eine lösbare Verbindung und weiter vorzugsweise als ein Klettverschluss und/oder als eine Steckverbindung und/oder in Form wenigstens eines Druckknopfs ausgebildet ist.

Wenn sich ein Flauschbereich und/oder ein Hakenbereich des Klettverschlusses über einen großen Bereich des Druckgürtels erstrecken, lässt sich der Druckgürtel besonders gut an die Größe des Körperteils anpassen. Ein enges Anliegen des Druckgürtels zur Erzeugung des Drucks auf das Körperteil kann dadurch erreicht werden. Insbesondere kann der Druckgürtel für verschiedene Körperteile, wie beispielsweise der Rumpf, insbesondere die Bauchgegend, der Oberschenkel oder der Arm, verwendet werden.

Es ist bevorzugt, dass die erste Druckkammer einen ersten Basisabschnitt, der sich im Wesentlichen linear erstreckt, und wenigstens zwei erste Zweigabschnitte, die von dem Basisabschnitt abzeigen, aufweist. Ferner ist bevorzugt, dass die zweite Druckkammer einen zweiten Basisabschnitt, der sich im Wesentlichen linear erstreckt, wenigstens zwei zweite Zweigabschnitte, die von dem zweiten Basisabschnitt abzweigen, aufweist, wobei vorzugsweise die zweiten Zweigabschnitte jeweils zwischen den ersten Zweigabschnitten angeordnet sind.

Ein besonders einfacher Aufbau kann dadurch erreicht werden, dass die Hauptabschnitte geradlinig und parallel verlaufen. Besonders bevorzugt sind die Hauptabschnitte entlang eines Umfangsrands des Druckgürtels vorgesehen. Dies bedeutet, dass der Druckgürtel selbst im Wesentlichen länglich aufgebaut ist und die Hauptabschnitte entlang der beiden Ränder des Druckgürtels verlaufen. In besonders bevorzugter Weise sind die Zweigabschnitte rechtwinkelig zu den Basisabschnitten angeordnet. Insbesondere sind die Zweigabschnitte in einer gegenseitig verzahnten Anordnung angeordnet.

Eine bevorzugte Ausführungsvariante der Erfindung sieht vor, dass eine Pumpe vorgesehen ist, die auf die verschiedenen Kammersysteme umschaltbar oder automatisch regelbar ist. Auf diese Weise kann mit einer einzelnen Pumpe Fluid in die verschiedenen Druckkammern gepumpt werden.

Die Anwendung des Druckgürtels, insbesondere auf Reisen, kann in einer besonders begünstigten Ausführungsvariante dadurch gewährleistet werden, dass der Druckgürtel mittels einer mobilen Stromversorgung tragbar ist und mindestens eine Pumpeinrichtung aufweist. Es ist jedoch auch möglich, dass die Pumpeinrichtung extern angebracht ist. Spezielle Behandlungskonzepte können dadurch verwirklicht werden, dass mehr als zwei Kammern vorgesehen sind, die vom Normaldruckzustand in den leichten Überdruckzustand übergeführt werden. Bevorzugt ist, wenn die Kammern eine doppelwandige, abschnittsweise flexible, wasserundurchlässige Hülle aufweisen.

Der Druckgürtel verwirklicht seine Zielsetzung besonders gut in Verbindung mit Bewegung im Fettverbrennungspuls mit sämtlichen Ausdauertrainingsgeräten (Rad, Laufband, Stepper, etc.).

Es ist bevorzugt, dass die erste Druckkammer und/oder die zweite Druckkammer aus zwei Lagen gefertigt sind, die vorzugsweise zur Trennung der ersten Druckkammer und der zweiten Druckkammer miteinander verschweißt sind. Dies stellt eine besonders einfache Herstellung des Druckgürtels bereit, da die beiden Lagen lediglich aufeinander gelegt werden müssen, um in einem anschließenden Verschweißungsschritt die Form und Anordnung der Kammern herzustellen. Dabei kann, wie oben beschrieben, die eine Lage elastischer als die andere Lage sein, um eine besonders große Wirkung zu erzielen.

Es ist bevorzugt, dass die Pumpeinrichtung eine Sensoreinrichtung aufweist, die den Druck des Fluids in der ersten Leitung und/oder in der zweiten Leitung misst. Die Sensoreinrichtung hat vorzugsweise einen Drucksensor, der den Druck des Fuids in der ersten und/oder in der zweiten Leitung misst. Das Ergebnis der Druckmessung wird vorzugsweise an die Steuereinrichtung weitergeleitet, die abhängig von der Druckmessung der Sensoreinrichtung den Betrieb der Pumpeinrichtung steuert. Insbesondere wenn der von der Sensoreinrichtung gemessene Druck über einem Grenzdruck liegt, wird der Betrieb der Pumpeinrichtung gestoppt. Der Grenzdruck ist vorzugsweise gleich dem Arbeitsdruck oder ist 5%, 10% oder 20% größer als der Arbeitsdruck. Insbesondere wenn der Druck in der ersten und/oder in der zweiten Leitung über einem vorgegebenen Arbeitsdruck ist, deutet dies auf ein Verstopfen, ein Abknicken oder eine anderweitige Blockierung der ersten und/oder zweiten Leitung hin. In einem solchen Fall wird dann insbesondere der Betrieb der Pumpeinrichtung beendet. Die Sensoreinrichtung kann daher dazu verwendet werden, den ordnungsgemäßen Anschluss und die richtige Anbringung des Druckgürtels der Pumpeinrichtung und der Leitungen hinzuweisen.

Es ist bevorzugt, dass die Pumpeinrichtung eine, insbesondere wiederaufladbare, Batterie und eine Ladezustandserkennungseinrichtung aufweist, wobei die Ladezustandserkennungseinrichtung den Ladezustand der wiederaufladbaren Batterie detektiert und vorzugsweise eine Benachrichtigungseinrichtung zur Ausgabe einer Benachrichtigung, insbesondere eines Geräuschs, aufweist.

Vorzugsweise wird die Pumpeinrichtung und die Steuereinrichtung und/oder die Sensoreinrichtung mittels der Batterie betrieben. Es kann eine wiederaufladbare oder eine nicht wiederaufladbare Batterie verwendet werden. Die Ladezustandserkennungseinrichtung detektiert den Ladezustand der wiederaufladbaren Batterie beispielsweise mittels einer Spannungs- und einer Strommessung. Wird bestimmt, dass der Ladezustand der Batterie unter einem unteren Grenzwert liegt, wird die Benachrichtigungseinrichtung aktiviert, um eine Benachrichtigung an den Verwender auszugeben. Die Benachrichtigung kann mittels einer Anzeige, beispielsweise mittels einer Leuchte, realisiert werden. Vorteilhaft bietet sich an, die Benachrichtigung mittels eines Geräuschs, das beispielsweise durch einen Lautsprecher erzeugt wird, bereitzustellen. Dies bietet den Vorteil, dass die Benachrichtigung, dass der Ladezustand unter einem gewissen Niveau ist, auch dann von dem Verwender bemerkt werden kann, wenn die Pumpeinrichtung in der Tragevorrichtung befestigt ist.

Zur Steuerung insbesondere eines Fitnessgeräts ist es bevorzugt, wenn die Pumpeinrichtung ein erstes Ventil, das mit der ersten Druckkammer verbunden ist, ein zweites Ventil, das mit der zweiten Druckkammer verbunden ist, und einen Kompressor aufweist, wobei der Kompressor mit dem ersten Ventil und mit dem zweiten Ventil verbunden ist.,Die Steuerung umfasst folgende Verfahrensschritte:
a) Öffnen des ersten Ventils;
b) Betätigen des Kompressors, während das erste Ventil geöffnet ist;
c) Anhalten des Kompressors, sobald der Druck des Fluids in der ersten Druckkammer einen vorgegebenen Druck erreicht;
d) Öffnen des zweiten Ventils;
e) Verschließen des ersten Ventils;
f) Betätigen des Kompressors; während das zweite Ventil geöffnet ist;
g) Anhalten des Kompressors, sobald der Druck des Fluids in der zweiten Druckkammer den vorgegebenen Druck erreicht;
h) Öffnen des ersten Ventils und
i) Verschließen des zweiten Ventils.

Es ist bevorzugt, dass der Kompressor in den Verfahrensschritten b) und f) während 2 bis 10 Sekunden, vorzugsweise während ca. 5 Sekunden, betätigt wird.

Es ist bevorzugt, dass der zu erreichende Druck (Arbeitsdruck) des Fluids in der ersten Druckkammer und/oder der zweiten Druckkammer zwischen 0,3 bar und 0,8 bar, vorzugsweise 0,6 bar, beträgt.

Es ist bevorzugt, dass zwischen den Schritten c) und d) der Druck in der ersten Druckkammer sowie zwischen den Schritten g) und h) der Druck in der zweiten Druckkammer während 6 bis 30 Sekunden, vorzugsweise ca. 15 Sekunden, aufrechterhalten wird. Es ist bevorzugt, dass zwischen den Schritten d) und e) und/oder zwischen den Schritten h) und i) eine beispielsweise drei sekündige Verzögerung vorgesehen ist. Dies bietet den Vorteil, dass zwischen den beiden Druckkammern ein Druckausgleich stattfindet und somit die Pumpleistung des Kompressors im Folgezyklus gespart wird.

Es ist bevorzugt, dass zwischen den Schritten b) und c) und/oder zwischen den Schritten f) und g) die Betätigung des Kompressors angehalten wird, wenn der Druck des Fluids in der ersten Druckkammer und/oder in der zweiten Druckkammer einen ersten Grenzdruck erreicht, wobei vorzugsweise die Betätigung des Kompressors angehalten wird, wenn der vorgegebene Druck nicht innerhalb einer vorgegebnen Zeitspanne erreicht wird.

Der Druck des Fluids in der ersten Druckkammer und/oder in der zweiten Druckkammer und/oder in der ersten Leitung und/oder in der zweiten Leitung wird insbesondere durch die Sensoreinrichtung bestimmt. Die Betätigung der Pumpeinrichtung wird insbesondere durch die Steuereinrichtung angehalten, wenn der Grenzdruck oder der vorgegeben Druck (Arbeitsdruck) erreicht ist. Der Grenzdruck kann vorliegen, wenn in der ersten und/oder zweiten Druckkammer der Arbeitsdruck vorliegt oder eine Verstopfung oder anderweitige Blockierung auftritt. Somit kann durch den Grenzdruck eine Überbeanspruchung der Pumpeinrichtung vermieden werden und gleichzeitig eine Steuerung der Druckkammern bereitgestellt werden.

Wenn der vorgegebene Druck (Arbeitsdruck) nicht innerhalb der vorgegebenen Zeitspanne erreicht wird, deutet dies darauf hin, dass eine undichte Stelle vorliegt, beispielsweise ist eine Leitung nicht korrekt angeschlossen. In diesem Fall wird die Pumpeinrichtung abgeschaltet, um einen unnötigen Verbrauch von Energie durch die Betätigung der Pumpeinrichtung zu vermeiden.

Es ist alternativ bevorzugt, dass zwischen den Schritten b) und c) und/oder zwischen den Schritten f) und g) bestimmt wird, ob der Druck des Fluids in der ersten Druckkammer und/oder in der zweiten Druckkammer in einem vorgegebenen Wertebereich liegt, wobei vorzugsweise die Betätigung des Kompressors angehalten wird, wenn der Druck des Fluids in der ersten Druckkammer und/oder in der zweiten Druckkammer nicht in dem vorgegebenen Wertebereich liegt. Liegt der Druck in der ersten und/oder der zweiten Leitung unter einem gewissen unteren Grenzdruck des vorgegebenen Wertebereichs, kann dies darauf hindeuten, dass der Druckgürtel nicht richtig mit der Pumpeinrichtung verbunden ist, beispielsweise, dass eine die Pumpeinrichtung und den Druckgürtel verbindende Leitung nicht angeschlossen ist. Der obere Grenzdruck des vorgegebenen Wertebereichs ist vorzugsweise der oben beschriebene.

Ferner ist ein Fitnessgerät vorgesehen, das eine Ladevorrichtung zum Laden einer Pumpeinrichtung umfasst, die eine wiederaufladbare Batterie und einen Kontaktbereich, der mit der Batterie elektrisch verbunden ist, aufweist. Die Ladevorrichtung umfasst wenigstens eine Einschubeinrichtung, in welche die Pumpeinrichtung einführbar ist, und eine Stromquelle, wobei die Einschubeinrichtung einen Gegenkontaktbereich aufweist, der den Kontaktbereich berührt und mit der Stromquelle verbunden ist, wenn die Pumpeinrichtung in die Einschubeinrichtung eingeführt ist, um die Batterie zu laden.

Die Stromquelle ist insbesondere ein Anschluss an ein externes Stromnetz und kann einen Transformator aufweisen, um insbesondere die Spannung des externen Stromnetzes auf die Spannung der wiederaufladbaren Batterie zu transformieren. Der Kontaktbereich der Pumpeinrichtung kann eine außen zugängliche Buchse sein. Wird die Pumpeinrichtung in die Einschubeinrichtung eingeführt, stößt der Kontaktbereich gegen den Gegenkontaktbereich und verbindet die Batterie mit der Stromquelle. Der Gegenkontaktbereich kann ein Stift oder ein Pin sein.

Es ist bevorzugt, dass die Ladevorrichtung eine Mehrzahl von Einschubeinrichtungen aufweist, die vorzugsweise übereinander angeordnet sind. Es ist ferner bevorzugt, dass die Gegenkontaktbereiche der Einschubeinrichtungen jeweils mit einer einzigen Stromquelle verbunden sind. Dadurch lässt sich insbesondere eine Mehrzahl von Einschubeinrichtungen mit einer Ladevorrichtung aufladen, für die vorzugsweise nur ein Anschluss an ein externes Stromnetz notwendig ist. Bevorzugt ist auch, dass sich die Einschubeinrichtungen aufeinanderstapeln lassen, so dass sie fest aufeinander stehen und gleichzeitig untereinander elektrisch verbunden sind. Ferner ist die Bedienung der Ladevorrichtung besonders einfach, da die Pumpeinrichtung nur in die Ladevoreinrichtung, insbesondere in die Einschubeinrichtung eingeführt werden muss. Es ist insbesondere nicht nötig, die Pumpeinrichtung in einem separaten Schritt an die Ladevorrichtung anzuschließen.

Es ist bevorzugt, dass das Fitnessgerät ferner eine Erkennungseinrichtung umfasst, die geeignet ist, ein Identifizierungsmittel, insbesondere einen Mitgliedsausweis oder eine Bankkarte, zu erkennen, wobei vorzugsweise die Erkennungseinrichtung eine Sicherungseinrichtung aufweist, welche die Pumpeinrichtung gegen ein Entnehmen sichert, wenn das Identifizierungsmittel nicht erkannt wurde. Das Identifizierungsmittel kann eine Bankkarte, ein Mitgliedsausweis oder dergleichen sein und kann für jede Einschubeinrichtung vorgesehen sein. Ist das Identifizierungsmittel kartenförmig, kann die Erkennungseinrichtung ein Kartenlesegerät sein, das insbesondere jeder Einschubeinrichtung zugeordnet ist. Wird das Identifizierungsmittel von der Erkennungseinrichtung erkannt, kann die Sicherungseinrichtung die Pumpeinrichtung in der Einschubeinrichtung freigeben, so dass der Verwender die Pumpeinrichtung entnehmen kann. Die Sicherungseinrichtung ist vorzugsweise jeder Einschubeinrichtung zugeordnet, so dass das Entnehmen einzelner Pumpeinrichtungen individuell gesteuert werden kann. Die Sicherungseinrichtung kann beispielsweise eine Rasteinrichtung sein. Mit Hilfe der Erkennungseinrichtung und der Sicherungseinrichtung ist es möglich, die Ausgabe von Pumpeinrichtungen mittels der Ladevorrichtung automatisch zu steuern. Das Identifizierungsmittel kann dabei als Erkennung oder als Pfand dienen.

Es ist bevorzugt, dass die Ladevorrichtung, insbesondere wenigstens eine Einschubeinrichtung, eine Fixiereinrichtung zur Befestigung an einer Wand aufweist. Die Fixiereinrichtung kann beispielsweise eine Öse oder eine Ausnehmung in der Einschubeinrichtung sein, mittels welcher die Ladevorrichtung an einer Wand befestigt werden kann. Insbesondere ist die Fixiereinrichtung durch die Einschubeinrichtung hindurch einsehbar, so dass beispielsweise eine Schraube durch die Sicherungseinrichtung hindurch geschraubt werden kann. Die Fixiereinrichtung kann an jeder Einschubeinrichtung oder nur an einer Einschubeinrichtung der Ladevorrichtung vorgesehen sein. Mittels der Fixiereinrichtung kann die Ladevorrichtung direkt an einer Wand befestigt werden oder, wenn die Ladevorrichtung abgestellt wird, gegen Umfallen gesichert werden.

Es ist bevorzugt, dass die Ladevorrichtung ferner eine Anbringungseinrichtung zum Befestigen der Tragevorrichtung und/oder des Druckgürtels aufweist. Die Anbringungseinrichtung kann beispielsweise als ein Regal oder als Vorsprünge zum Anhängen des Druckgürtels und/oder der Tragevorrichtung, wie beispielsweise in Art einer Garderobe, ausgebildet sein. Die Anbringungseinrichtung kann ferner wagrechte Stangen aufweisen, auf die der Druckgürtel und/oder die Tragevorrichtung gehängt werden können.

Ferner ist ein Fitnessgerät vorgesehen, das ein Befestigungsmittel umfasst. Das Befestigungsmittel hat einen Haltebereich zum Befestigen einer Pumpeinrichtung und einen Befestigungsbereich zum Befestigen des Befestigungsmittels einem Objekt, wobei der Befestigungsbereich einen Einlageabschnitt und einen Fixierabschnitt aufweist.

Das Befestigungsmittel dient insbesondere dazu, die Pumpeinrichtung an einem Gerät zur körperlichen Ertüchtigung, beispielsweise ein Laufband, ein Indoorrad oder ein Stepper zu befestigen. Wenn gleichzeitig der Druckgürtel verwendet wird, kann die Pumpeinrichtung an dem Gerät angebracht werden, wozu die Tragevorrichtung dann nicht notwendig ist. Der Haltebereich dient insbesondere zum Fixieren der Pumpeinrichtung, und der Befestigungsbereich wird an dem Gerät, insbesondere an einer Stange des Geräts angebracht. Dazu kann das Gerät oder die Stange an dem Anlageabschnitt anliegen und durch den Fixierungsabschnitt fixiert sein. Das Befestigungsmittel kann an einer vertikalen oder horizontalen Stange angebracht werden.

Es ist bevorzugt, dass der Haltebereich eine obere Halbseite aufweist, wobei die obere Halbseite zum Einlegen der Pumpvorrichtung offen ist. Dies bedeutet, dass der Haltebereich als eine Schale ausgebildet sein kann, die insbesondere ähnliche Innenabmessungen wie die Außenabmessungen der Pumpeinrichtung hat, so dass die Pumpeinrichtung zwar leicht eingelegt werden kann, und trotzdem gegen Vibrationen fixiert ist.

Es ist bevorzugt, dass der Anlageabschnitt einen Grundabschnitt und einen Kontaktabschnitt aufweist, wobei vorzugsweise der Grundabschnitt wenigstens zwei Öffnungen hat, in die der Kontaktabschnitt einsteckbar ist. Es ist ferner bevorzugt, dass der Kontaktabschnitt als eine Anlagefläche oder als wenigstens zwei Anlagevorsprünge ausgebildet ist. Der Grundabschnitt dient insbesondere dafür, verschiedene Kontaktabschnitte an dem Befestigungsmittel anzubringen. Da das Gerät und insbesondere die Stange verschiedenste Abmessungen haben können, ist es zweckmäßig, den Befestigungsbereich an das Gerät anzupassen. Dazu sind verschiedene Kontaktabschnitte hilfreich. Dadurch, dass der Kontaktabschnitt in Öffnungen des Grundabschnitts eingeschraubt oder eingesteckt, insbesondere auch verrastet, werden kann, ist ein einfacher Austausch des Kontaktabschnitts möglich. Der Grundabschnitt hat vorzugsweise vier Öffnungen. An dem Grundabschnitt oder einem Kontaktabschnitt können zum gegenseitigen Verbinden Rastvorrichtungen vorgesehen sein.

Es ist bevorzugt, dass der Kontaktabschnitt als eine Anlagefläche oder als wenigstens zwei Anlagevorsprünge ausgebildet ist. Die Anlagefläche kann planar oder mit einer runden oder eckigen Ausstülpung versehen sein. Die Anlagenvorsprünge können Gummipfropfen sein, die einen besonders hohen Reibungskoeffizienten haben, so dass eine hohe Reibung zwischen dem Gerät und dem Kontaktabschnitt entsteht.

Es ist bevorzugt, dass der Fixierungsabschnitt ein biegsames Band, insbesondere ein Kabelbinder ist. Ein Kabelbinder stellt ein besonders einfaches und schnelles Befestigungsmittel an dem Gerät dar. Es ist aber auch jedes andere Band, das an seinen freien Enden beispielsweise mittels einer Schnalle oder einer Rastvorrichtung geschlossen werden kann, möglich.

Es ist festzuhalten, dass das Fitnessgerät, insbesondere der Druckgürtel, zur lokalen Gewichtsreduktion durch Verbesserung der Hautdurchblutung bei einer Bewegung im Fettverbrennungspuls dient. Der Fettverbrennungspuls liegt in der Regel bei 60 % bis 70 % der maximalen Frequenz der trainierenden Person. In diesem Bereich bezieht der Körper seine Energie vor allem aus dem Muskelfett und den freien Fetten im Blut. Der Verbrennungspuls hängt demnach insbesondere von dem Geschlecht und dem Alter der trainierenden Person ab. So hat eine weibliche Person im Alter von 25 Jahren in der Regel einen Fettverbrennungspuls zwischen 121 und 141 Herzschlägen pro Minute.

Das Fitnessgerät, insbesondere der Druckgürtel, kann auch als ein Massagegerät verwendet werden.

Weitere Merkmale und Vorteile des erfindungsgemäßen Fitnessgeräts ergeben sich aus den nachfolgend wiedergegebenen Ausführungsbeispielen. In den die Ausführungsbeispiele lediglich schematisch darstellenden Zeichnungen veranschaulichen im Einzelnen:
- Fig. 1: eine Fitnessanordnung;
- Fig. 2: eine Außenseite eines Druckgürtels;
- Fig. 3: eine Innenseite des Druckgürtels;
- Fig. 4: eine schematische Darstellung der Funktionsweise des Druckgürtels;
- Fig. 5: eine Explosionsdarstellung eines Anschlussbereichs;
- Fig. 6: eine Außenseite der Tragevorrichtung;
- Fig. 7: eine Innenseite der Tragevorrichtung mit einer Pumpeinrichtung;
- Fig. 8: eine Leitung;

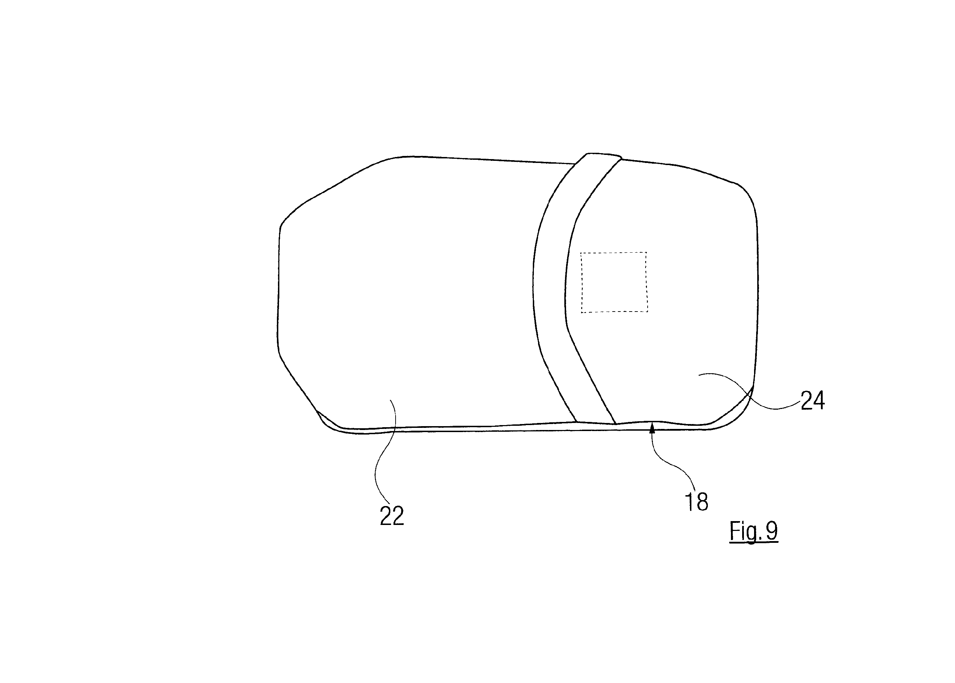

- Fig. 9: eine Vorderseite der Halterung;
- Fig. 10: eine Hinterseite der Halterung;

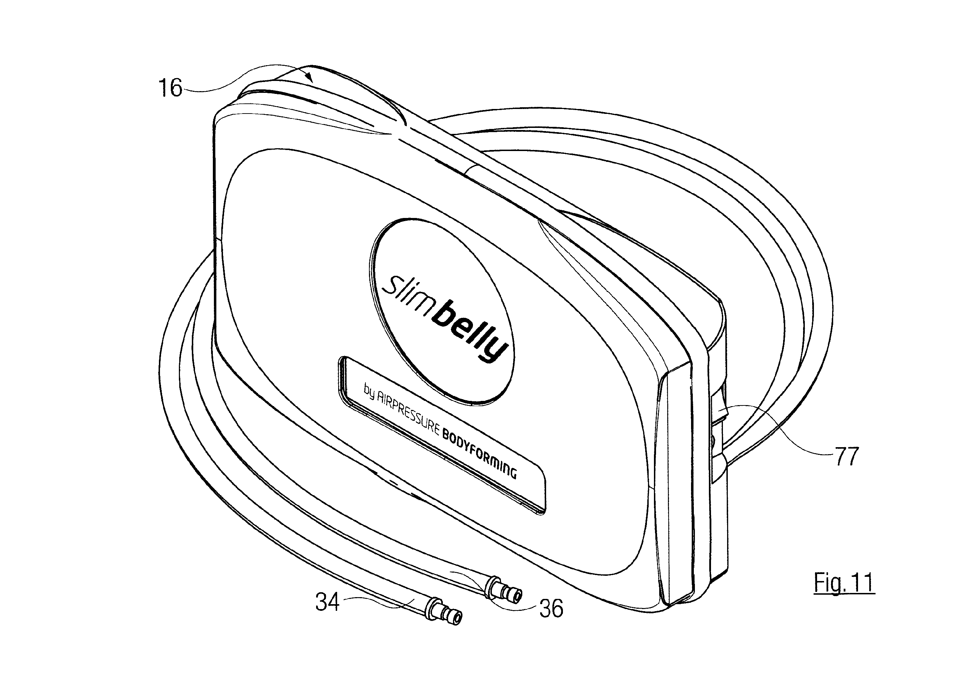

- Fig. 11: eine Perspektivansicht der Pumpeinrichtung mit zwei Leitungen;
- Fig. 12a-12h: verschiedenste Ansichten der Pumpeinrichtung;
- Fig. 13: eine Explosionsdarstellung der Pumpeinrichtung;
- Fig. 14: ein Innenteil der Pumpeinrichtung;
- Fig. 15a bis Fig. 15c: verschiedene Ansichten einer Ladevorrichtung;
- Fig. 16a und Fig. 16b: Schnitte durch die Ladevorrichtung wie in Fig. 15a angedeutet;
- Fig. 17: eine vergrößerte Darstellung einer Kontaktfläche und eines Kontaktstifts;
- Fig. 18a bis Fig. 18p: verschiedene perspektivische Ansichten eines Befestigungsmittels;
- Fig. 19a bis Fig. 19c: Draufsichten auf das Befestigungsmittel;

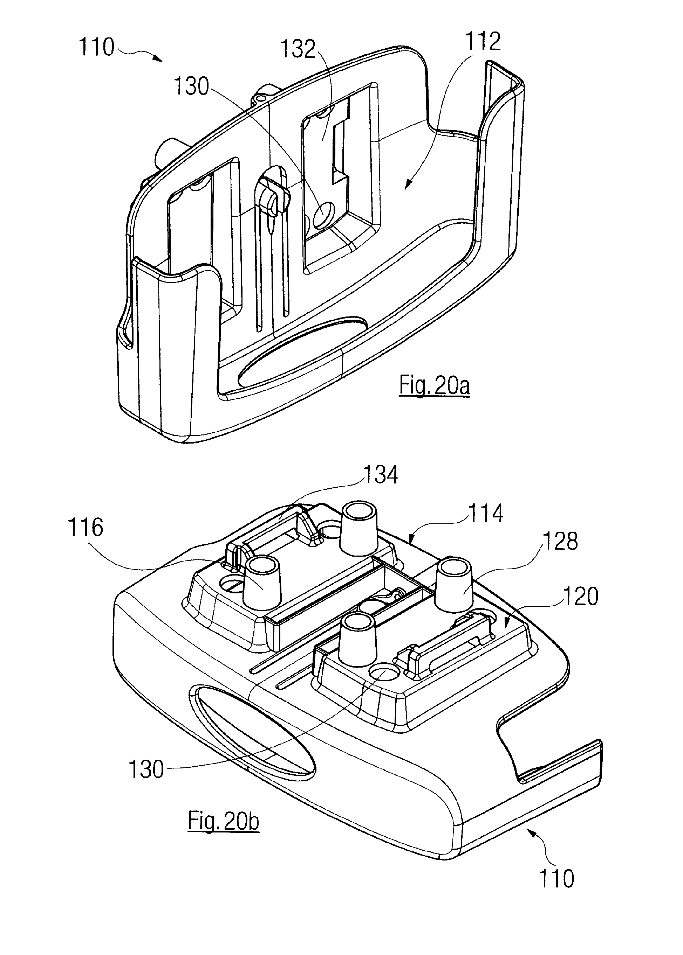

- Fig. 20a und Fig. 20b: weitere perspektivische Ansichten des Befestigungsmittels;
- Fig. 21: eine Ladevorrichtung mit einer Anbringungseinrichtung; und
- Fig. 22: ein vergrößerter Ausschnitt aus Fig. 21, der eine Erkennungseinrichtung zeigt.

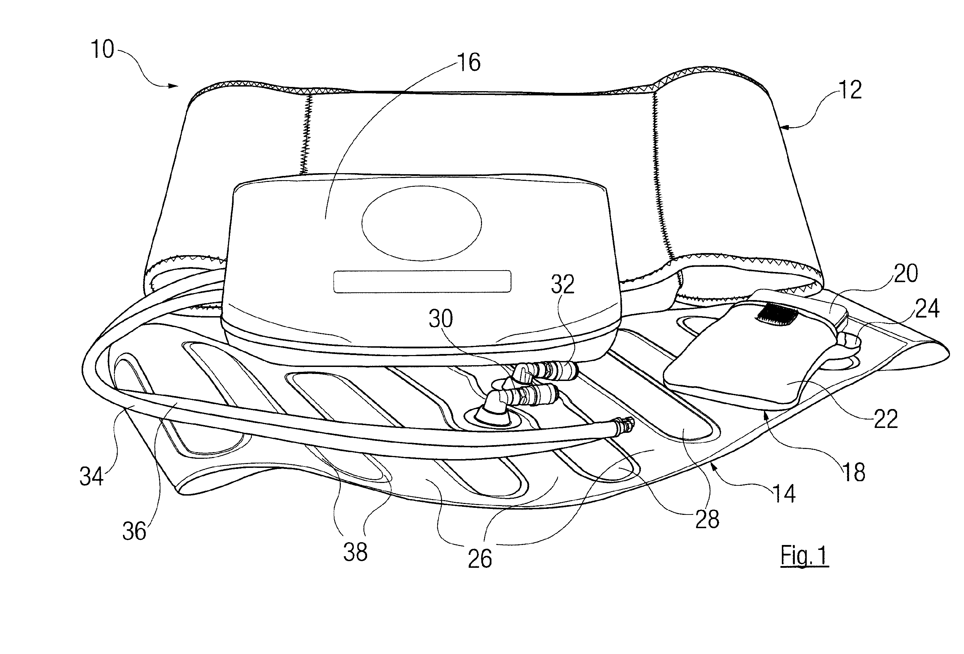

Fig. 1 zeigt ein Fitnessgerät 10 mit einer Tragevorrichtung 12, einem Druckgürtel 14, einer Pumpeinrichtung 16 und einer Halterung 18. In der Halterung 18 ist ein Gegenstand 20, hier ein MP3-Player, angeordnet. Die Halterung 18 hat einen Beutel 22 und einen Deckel 24. Der Deckel 24 ist an der Rückseite der Halterung 18 mit dem Beutel 22 verbunden, während an der Vorderseite ein Klettverschlusses eine Verbindung zwischen Beutel 22 und Deckel 24 herstellt. Der Gegenstand 20 ist bei verschlossenen Deckel 24 vollständig von der Halterung 18 umschlossen.

Der Druckgürtel 14 hat eine erste Druckkammern 26 und eine zweite Druckkammern 28. Die erste Druckkammer 26 ist mit einer ersten Anschlusseinrichtung 30 verbunden. Die zweite Druckkammer 28 ist mit einer zweiten Anschlusseinrichtung 32 verbunden. Der Pumpeinrichtung 16 ist eine erste Leitung 34 und eine zweite Leitung 36 zugeordnet. Wie aus Fig. 1 gut ersichtlich ist, ist der Druckgürtel 14 aus zwei Lagen aufgebaut, die über Schweißnähte 38 miteinander verbunden sind.

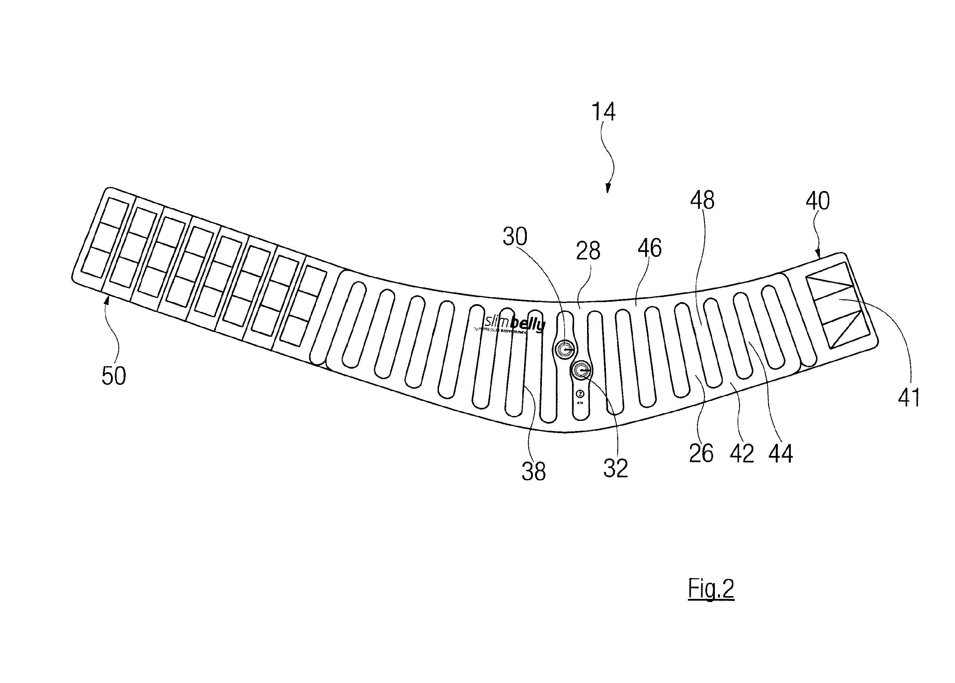

Die erste Anschlusseinrichtung 30 und die zweite Anschlusseinrichtung 32 sind um einen 90°-Winkel abgewinkelt. Der Druckgürtel 14 hat an einer äußeren Seite an einem ersten Endbereich 40 einen Hakenbereich 41 für einen Klettverschluss wie dies in Fig. 2 ersichtlich ist. Die erste Druckkammer 26 erstreckt sich über mehr als 50 Prozent der Länge des Druckgürtels 14 und hat einen ersten Basisabschnitt 42 und erste Zweigabschnitte 44, die im Wesentlichen senkrecht von dem Basisabschnitt 42 wegführen. Die zweite Druckkammer 28 hat einen zweiten Basisabschnitt 46, von dem zweite Zweigabschnitte 48 senkrecht wegführen. Die ersten 44 und zweiten Zweigabschnitte 46 sind miteinander verzahnt angeordnet.

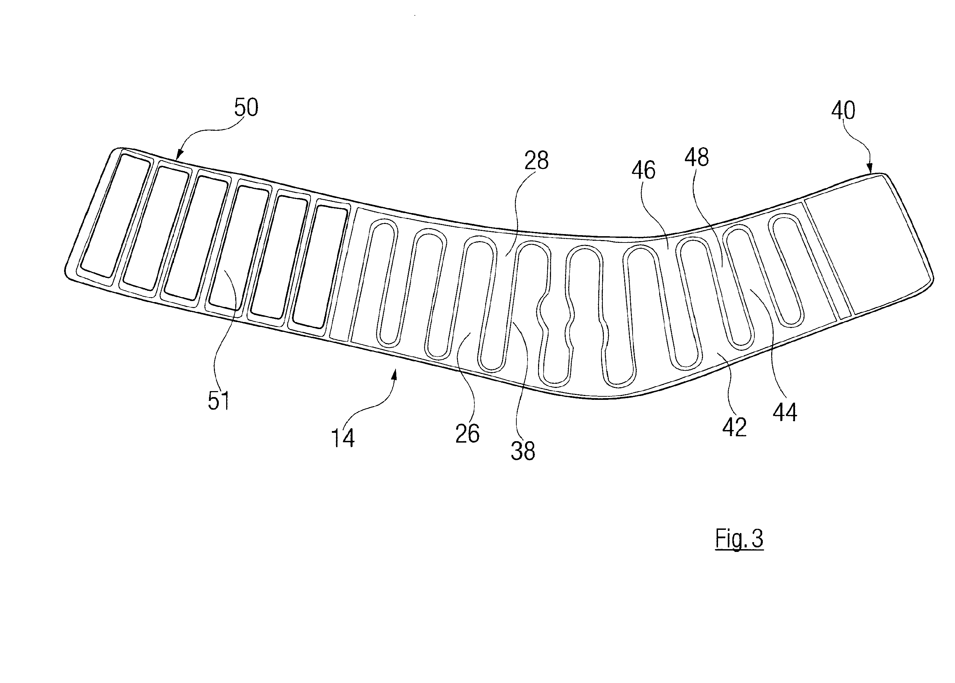

An der in Fig. 3 gezeigten inneren Seite des Druckgürtels 14 sind an dem gegenüberliegenden zweiten Endbereich 50 Flauschbereiche 51 für den Klettverschluss angeordnet.

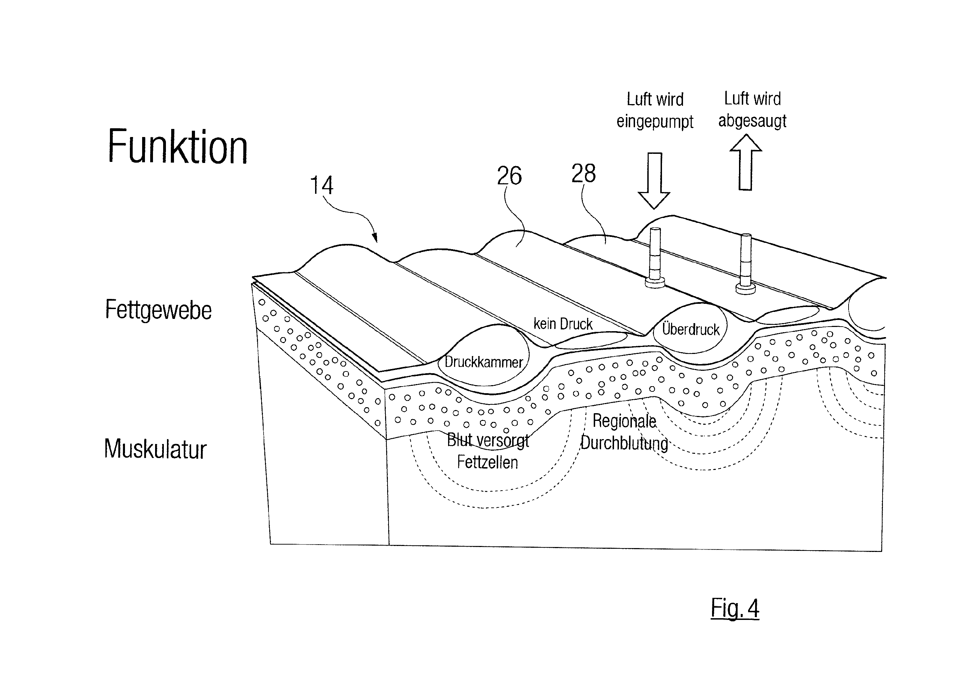

In Fig. 4 ist die Anordnung des Druckgürtels 14 an dem Körperteil der Person dargestellt. Wird nun die erste Druckkammer 26 mittels der Pumpeinrichtung 16 bepumpt und gleichzeitig Luft aus der zweiten Druckkammer 28 gesaugt oder nicht mit Druck beaufschlagt, entstehen Bereiche an dem Körperteil, die mit Druck beaufschlagt werden, und Bereiche, an denen kein Druck auf das Körperteil ausgeübt wird. Durch abwechselndes Bepumpen und Entpumpen der ersten 26 und zweiten Druckkammer 28 kann so die Durchblutung in dem Körperteil angeregt werden. Es sind verschiedenste Pumpzyklen für die erste 26 und zweite Druckkammer 28 denkbar, die sich insbesondere in der Zeitspanne und Frequenz der Druckausübung auf das Körperteil unterscheiden.

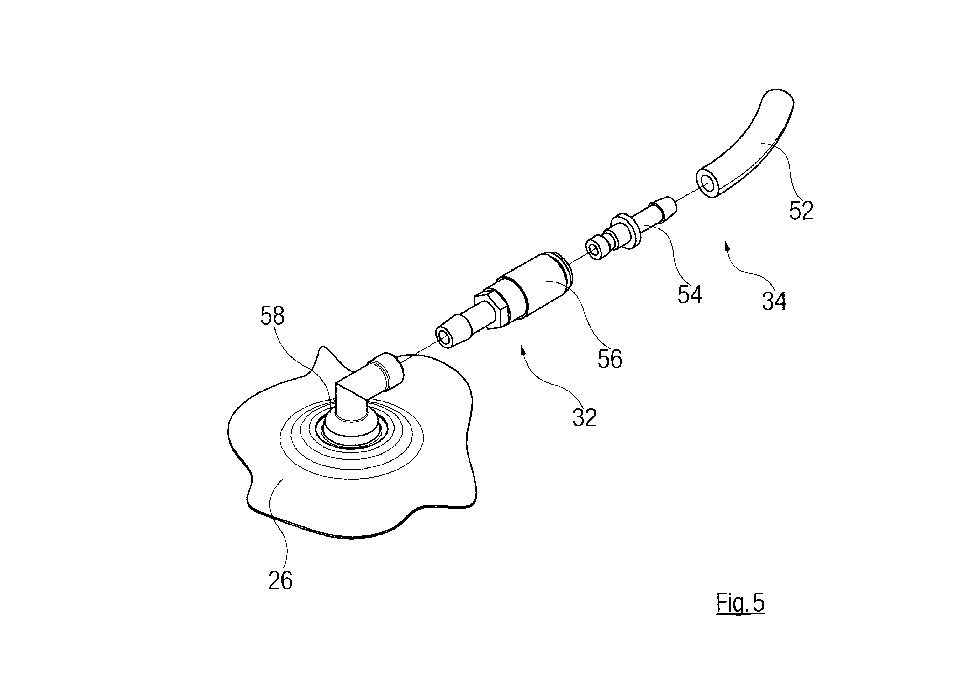

Wie in Fig. 5 dargestellt hat die erste Leitung 34 einen Schlauch 52 aus einem biegsamen Kunststoff und ein erstes Endstück 54 aus Metall. Das Endstück 54 ist nicht lösbar in den Schlauch 52 eingesteckt. Die erste Anschlusseinrichtung 32 hat einen ersten Anschlussbereich 56, der aus Metall hergestellt ist. Die erste Anschlusseinrichtung 32 hat ferner ein Winkelstück 58, das aus Kunststoff hergestellt ist. Das Winkelstück 58 ist um einen 90°-Winkel abgewinkelt und mit der ersten Druckkammer 26 fluiddicht verbunden. Der erste Anschlussbereich 56 wird in das Winkelstück 58 nicht lösbar eingesteckt. Zur Verbindung der ersten Leitung 34 mit der Anschlusseinrichtung 32 wird das erste Endstück 54 in den ersten Anschlussbereich 56 gesteckt, um eine fluiddichte Steckverbindung zu formen.

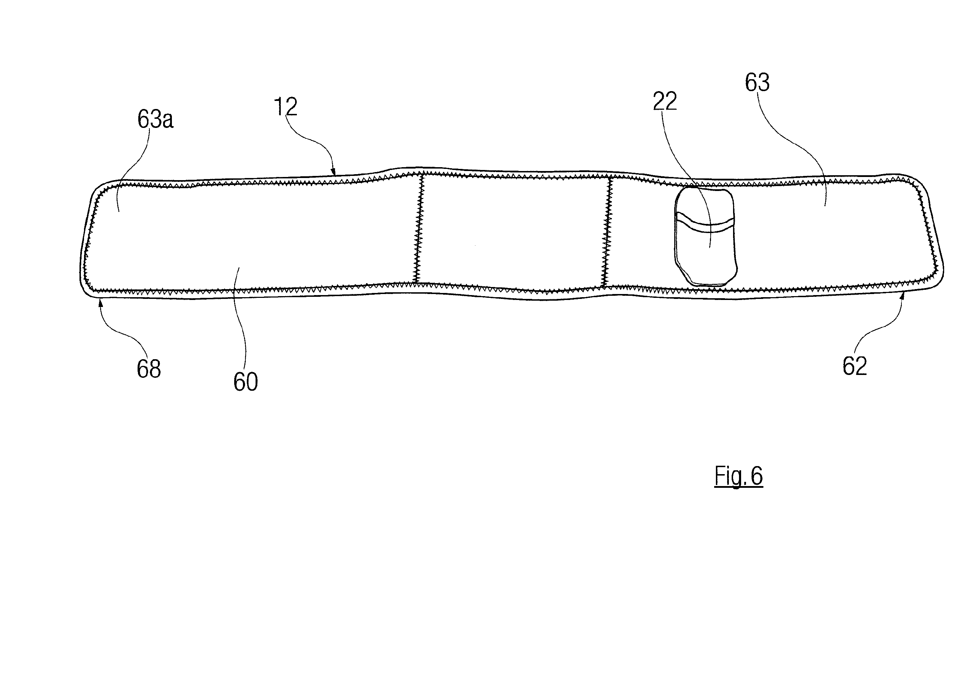

Fig. 6 zeigt eine Außenseite der Tragevorrichtung 12. An der Tragevorrichtung 12 ist die Halterung 22 befestigt. Die Halterung 22 ist in einem geschlossenen Zustand dargestellt. Die Tragevorrichtung 12 weist einen Grundkörper 60 auf, der bis auf einen Mittelbereich an der Außenseite mit einem Flauschband versehen ist. Insbesondere an einem zweiten Ende 62 des Grundkörpers 60 ist ein Flauschband 63 vorgesehen. An einem ersten Ende 68 und an dem Mittelbereich ist ein weiteres Flauschband 63a vorgesehen. Hakenband 69 und Flauschband 63 sowie weiteres Flauschband 63a bilden ein Verbindungsmittel.

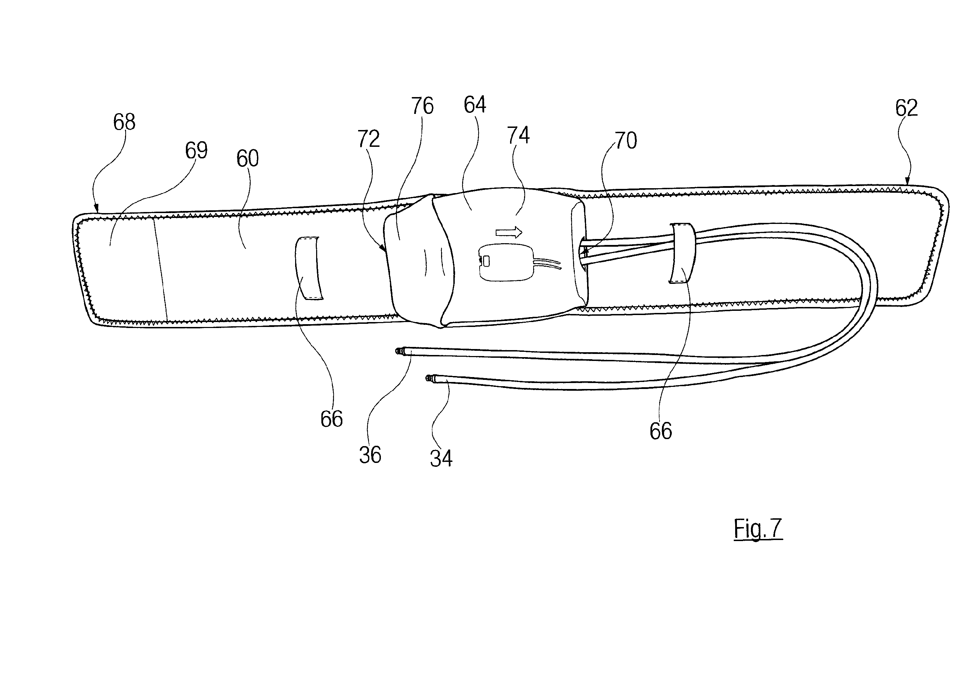

Wie aus Fig. 7 zu erkennen ist, hat der Grundkörper 60 an der Innenseite ein Haltemittel 64 und zwei Laschen 66. An der ersten Seite 68 des Grundkörpers 60 ist das Hakenband 69 vorgesehen. Das Haltemittel 64 weist eine erste 70 und zweite Öffnung 72 auf, wobei aus der ersten Öffnung 70 die erste Leitung 34 und die zweite Leitung 36 aus dem Haltemittel 64 herausgeführt werden können. Über die zweite Öffnung 72 kann ein Schalter 77 der Pumpeinrichtung 16 bedient werden. Die Laschen 66 dienen zum Halten und Führen der ersten 34 und zweiten Leitung 36.

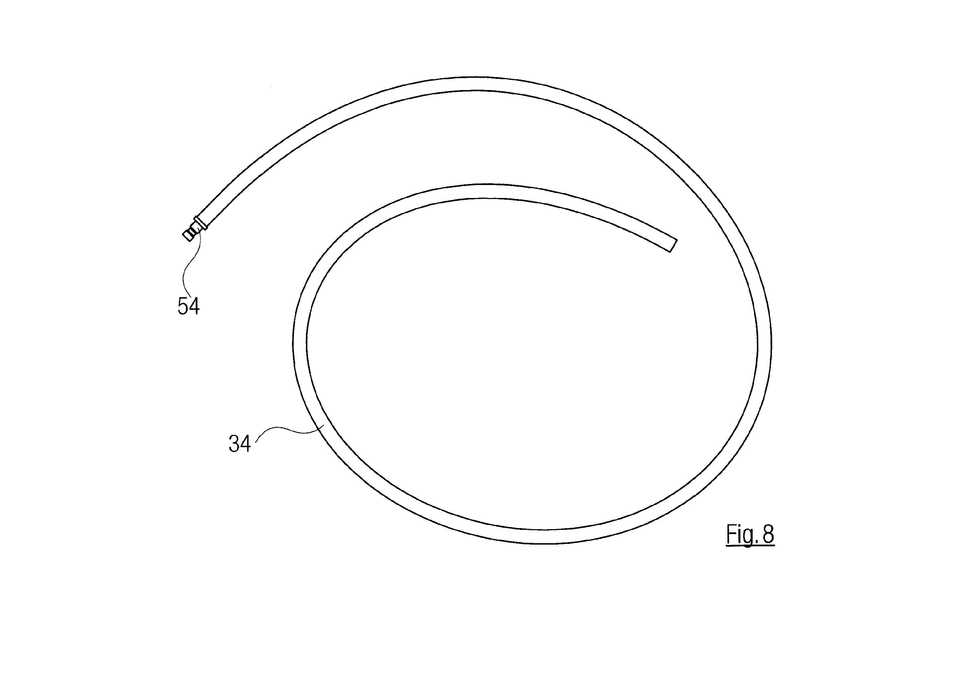

Das Haltemittel 64 ist fest an dem Grundkörper 60 angebracht und als eine Tasche 74 ausgebildet. Die Tasche hat einen Verschluss 76, mittels dem die Tasche 74 geschlossen werden kann. Wie dies gut in Fig. 8 zu erkennen ist, weisen die erste und zweite Leitung 34, 36 jeweils ein Endstück 54 in Form eines Steckers für die Anschlusseinrichtungen 30, 32 auf.

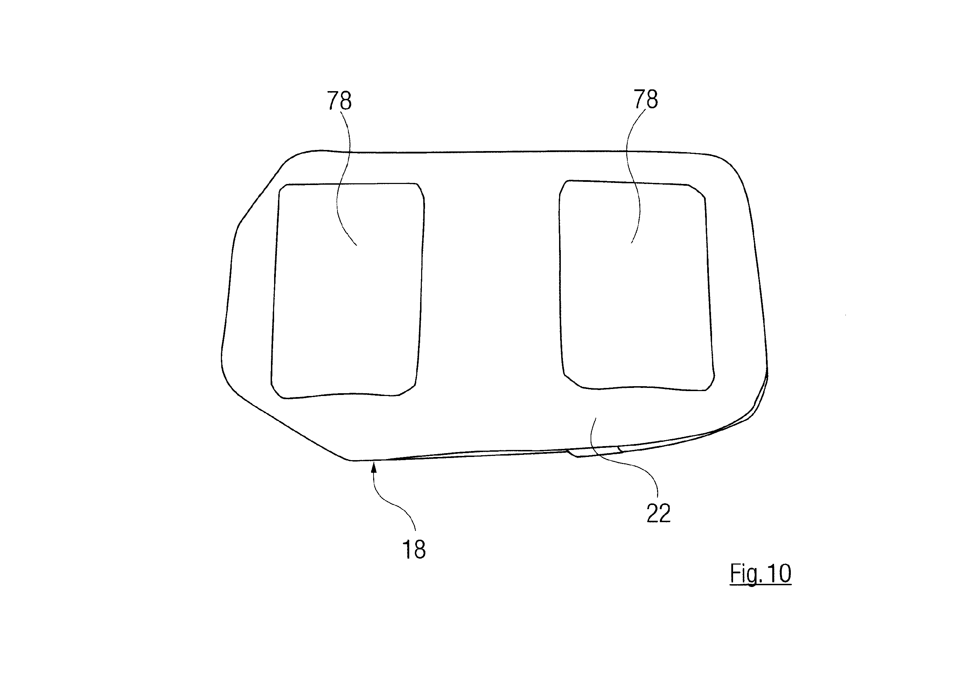

Wie dies gut in Fig. 10 ersichtlich ist, hat die Halterung 18 an der Rückseite zwei Hakenstreifen 78 an dem Beutel 22, mittels denen die Halterung 18 an dem Flauschband 63a des Grundkörpers 60 angebracht werden kann.

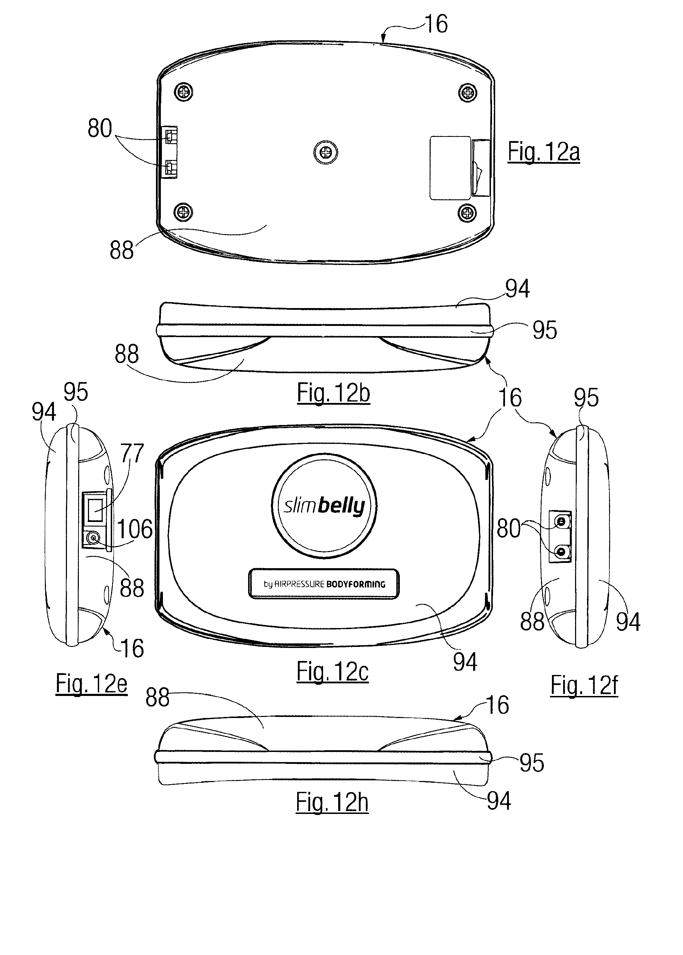

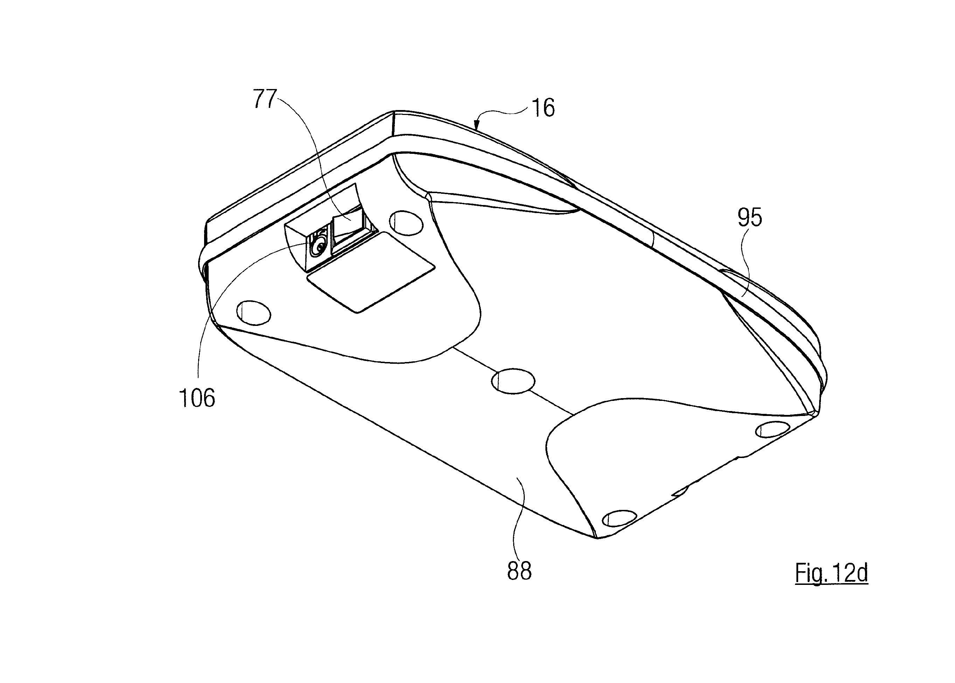

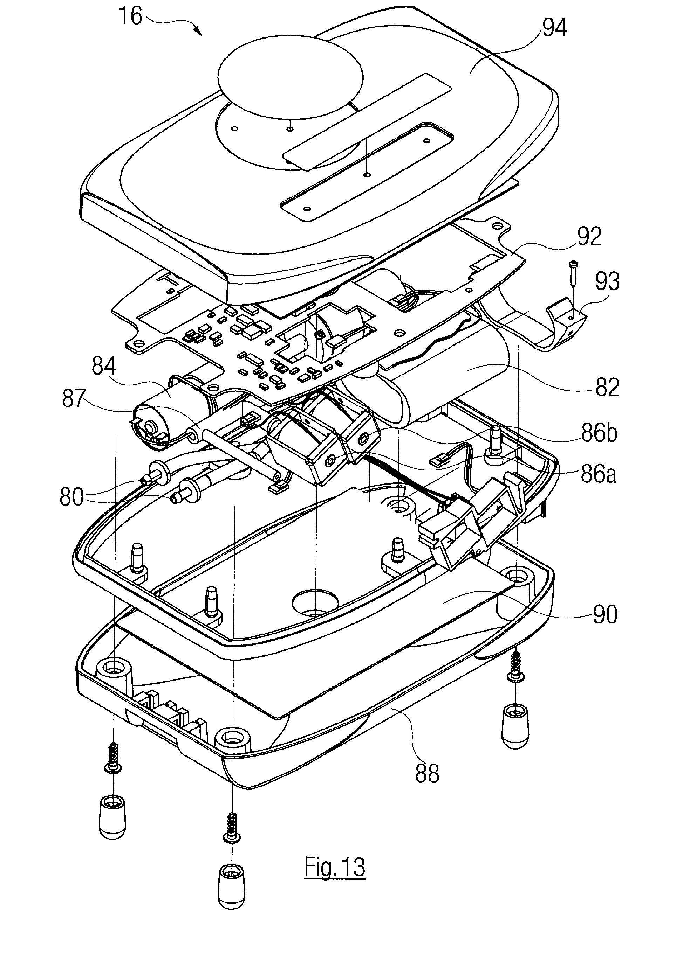

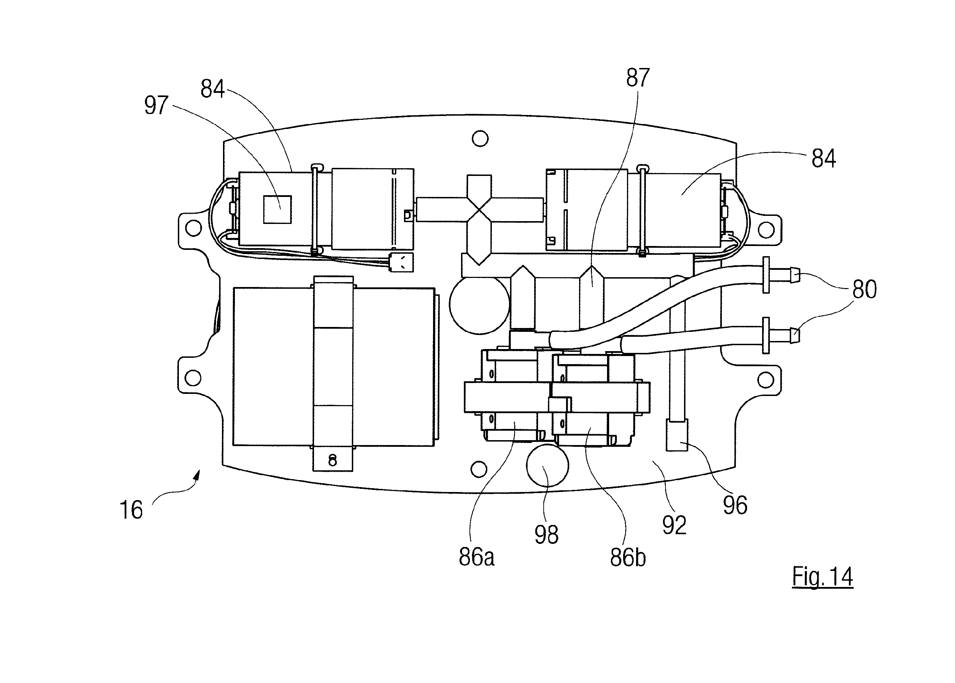

Figs. 12a bis 12h zeigen jeweils Seitenansichten der Pumpeneinrichtung 16. Die Pumpeinrichtung 16 hat zwei Anschlüsse 80 und einen Schalter 77. Die erste 34 und zweite Leitung 36 werden mit den Anschlüssen 80 verbunden. Die Pumpeinrichtung 16 hat, wie es gut in Figs. 13 und 14 ersichtlich ist, eine Batterie 82, zwei Kompressoren 84, die mit einem ersten Ventil 86a und einem zweiten Ventil über Rohre 87 in Fluidverbindung stehen. Die Kompressoren 84 sind über die Rohre 87 mit den Anschlüssen 80 verbunden, wobei die Ventile 86a und 86b die einzelnen Anschlüsse 80 öffnen oder schließen. Ferner weist die Pumpeinrichtung 16 ein Bodenteil 88, eine Dämpfungsschicht 90, eine Platine 92 und einen Deckel 94 auf. Die Platine 92 trägt die Kompressoren 84, die Batterie 82 und die Ventile 86a und 86b wie dies in Fig. 14 zu erkennen ist. Dazu werden Halteklammern 93 und/oder Kabelbinder verwendet. Die Platine 92 ist in einem umlaufenden Halterahmen 95, der in Figs. 12 zu erkennen ist, aus weichem Kunststoff eingehängt, welcher wiederum zwischen dem Bodenteil 88 und dem und dem Deckel 94 eingeklemmt ist. Zusätzlich ist sowohl im Bodenteil 88 als auch im Deckel 94 eine Dämpfungsschicht 90 aus Neopren eingelegt, um weitere Geräuschdämmung zu erzielen.

Wie in Fig. 14 zu erkennen ist, weist die Pumpeinrichtung 16 ferner eine Sensoreinrichtung 96 auf, die den Druck des Fluids in der ersten Leitung 34 und in der zweiten Leitung 36 misst. Die Sensoreinrichtung 96 ist mit der Steuereinrichtung 99, verbunden, um den Betrieb der Pumpeinrichtung 16 zu beenden, falls der in der ersten 34 und zweiten Leitung 36 gemessene Druck einen Grenzdruck erreicht oder der Grenzdruck nicht in einer vorgegebenen Zeitspanne erreicht wird. Die Steuereinrichtung 99 kann als ein separates Bauteil auf der Platine 92 angeordnet sein. Alternativ kann die Steuereinrichtung 99 durch die Platine 92 selbst bereit gestellt sein.

Wie dies ebenfalls in Fig. 14 zu erkennen ist, weist die Pumpeinrichtung 16 ferner eine Ladezustandserkennungseinrichtung 97 auf, die den Ladezustand der Batterie 82 misst. Ist der Ladezustand der Batterie 82 unter einem vorgegebenen Wert, wird ein Signal an eine Benachrichtigungseinrichtung 98 ausgegeben, die in der gezeigten Ausführungsform ein Lautsprecher ist. Diese gibt dann einen Summton aus.

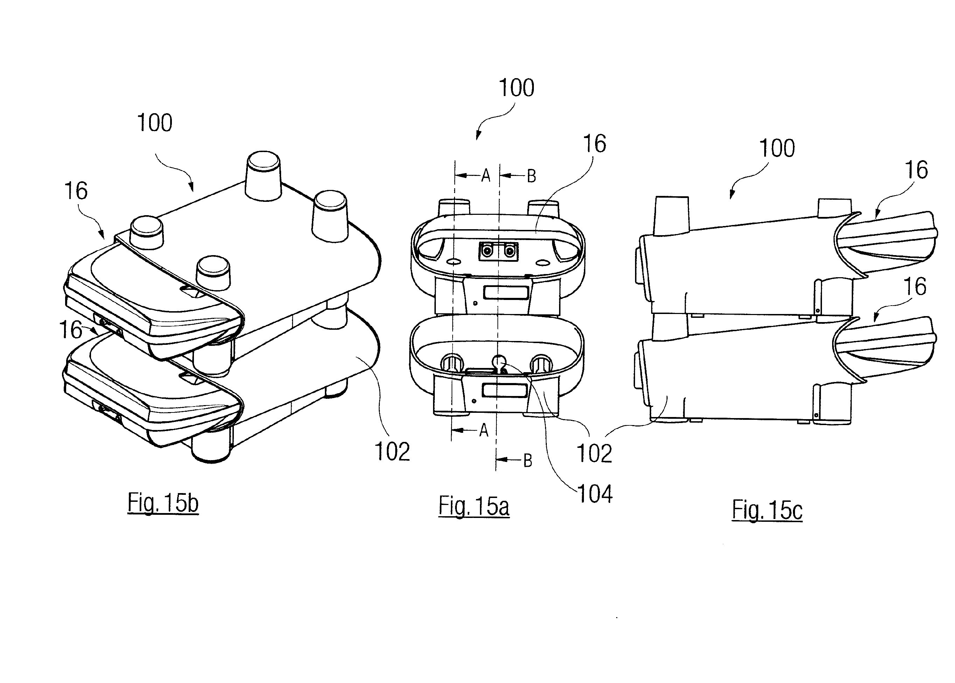

Wie in den Figs. 15a bis 15c ersichtlich, hat eine Ladevorrichtung 100 zwei Einschubeinrichtungen 102, in die jeweils eine Pumpeinrichtung 16 eingeschoben ist. Die Einschubeinrichtung 102 ist zu einer Horizontalen geneigt, so dass die Pumpeinrichtung 16 nicht aus der Einschubeinrichtung 102 herausrutschen kann. Die Einschubeinrichtungen 102 sind aufeinander angeordnet. In der Einschubeinrichtung 102 ist ein Gegenkontaktbereich 104 in Form eines Pins vorgesehen, wie dies aus Fig. 15a ersichtlich ist. Der Gegenkontaktbereich 104 berührt einen Kontaktbereich 106 der Pumpeinrichtung 16, welcher in Figs. 12d und 12e in Form einer Buchse zu erkennen ist. Kontaktbereich 106 und Gegenkontaktbereich 104 sind aus Metall hergestellt und stellen eine elektrische Verbindung zwischen einer nicht gezeigten Stromladevorrichtung und der Batterie 82 der Pumpeinrichtung 16 her.

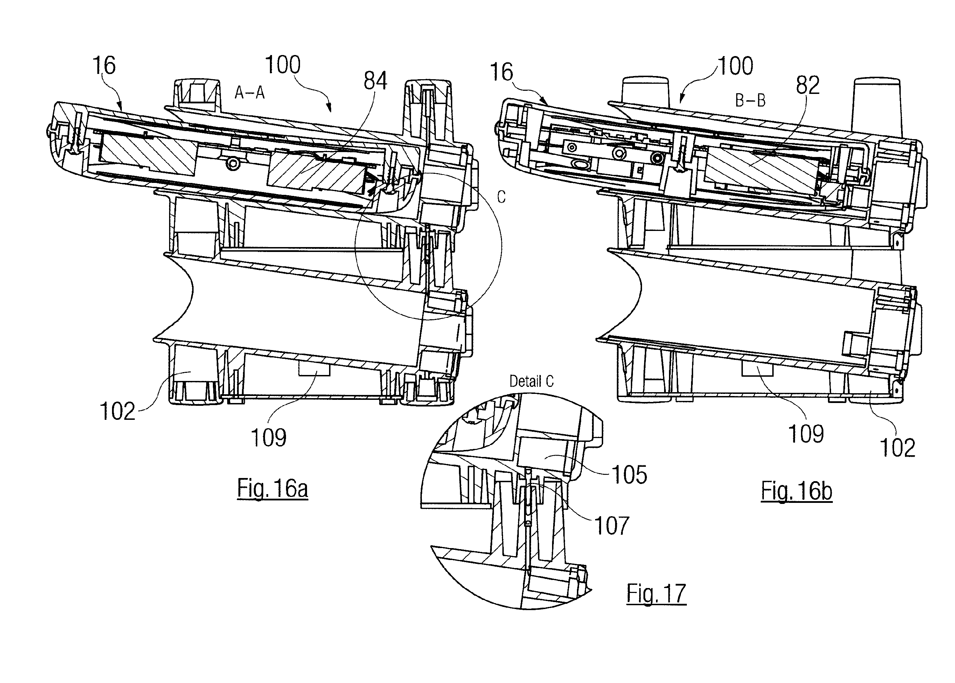

Fig. 17 stellt die elektrische Verbindung zwischen den einzelnen Einschubeinrichtungen 102 dar. Dazu weist die Einschubeinrichtung 102 auf der unteren Seite einen Kontaktfläche 105 und auf der oberen Seite einen Kontaktstift 107 auf, die sich berühren, wenn zwei Einschubeinrichtungen 102 übereinander gestapelt sind.

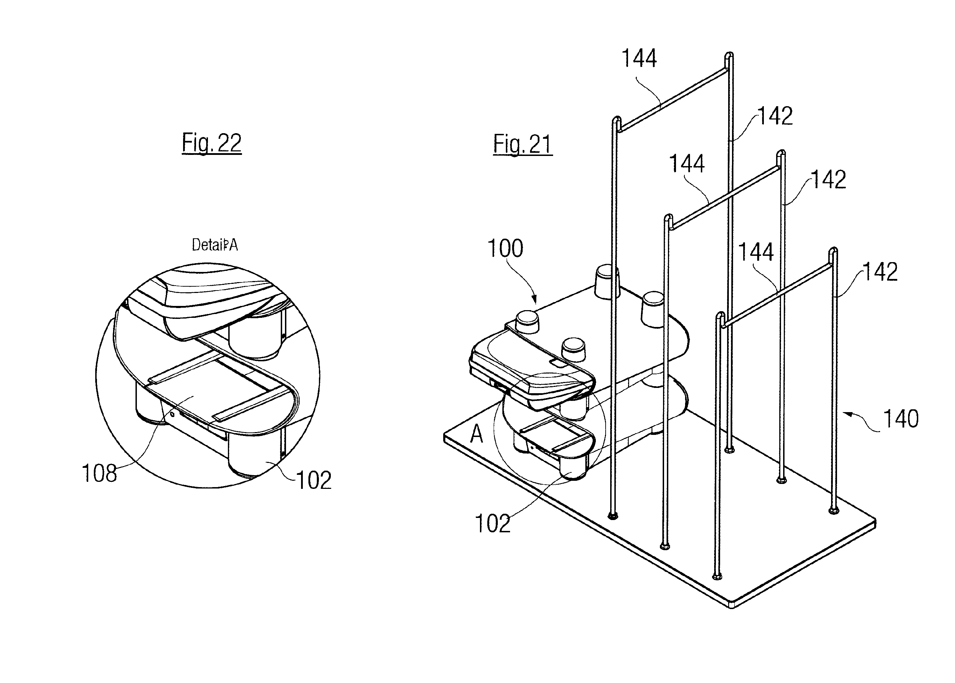

Wie dies insbesondere in Fig. 22 zu erkennen ist, weist die Ladevorrichtung 100 an jeder ihrer Einschubeinrichtungen 102 eine Erkennungseinrichtung 108 auf. Die Erkennungseinrichtung 108 ist in der gezeigten Ausführungsform als ein Kartenlesegerät ausgebildet, die einen Mitgliedsausweis in Form einer Karte als Identifizierungsmittel erkennt. Wird ein gültiges Identifizierungsmittel erkannt, wird ein Signal an eine in Fig. 16a und 16b gezeigte Sicherungseinrichtung 109 weitergegeben. Die Sicherungseinrichtung 109 hintergreift die Pumpeinrichtung 16, so dass sie nicht aus der Einschubeinrichtung 102 herausgenommen werden kann, sofern kein Signal von der Erkennungseinrichtung 108 empfangen wird. Empfängt die Sicherungseinrichtung 109 ein Signal von der Erkennungseinrichtung 108, wird die Pumpeinrichtung 16 freigegeben, so dass der Verwender die Pumpeinrichtung 16 aus der Einschubeinrichtung 102 herausnehmen kann.

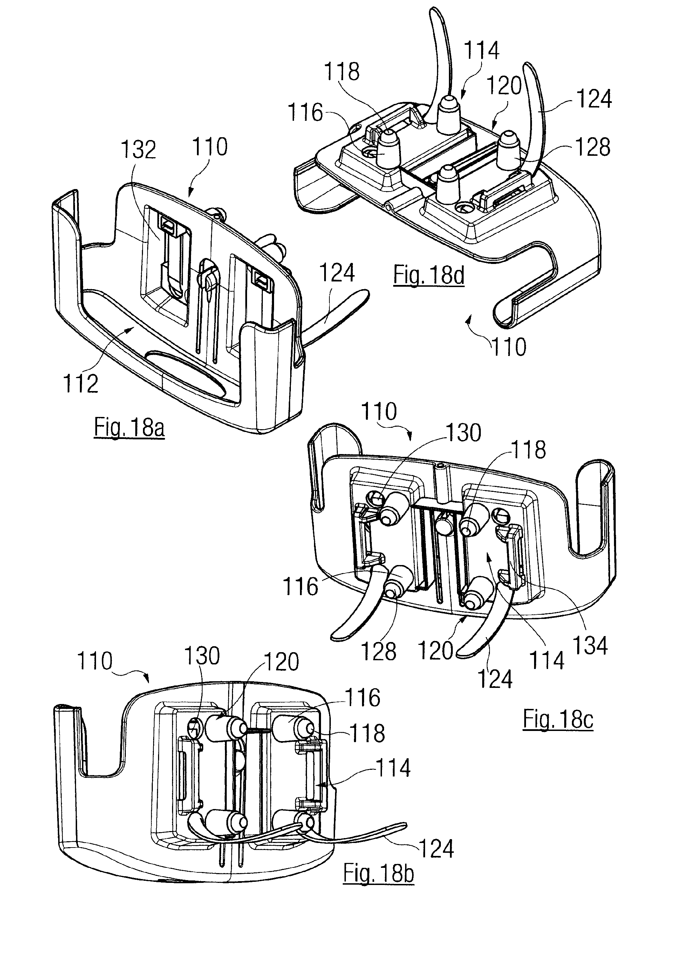

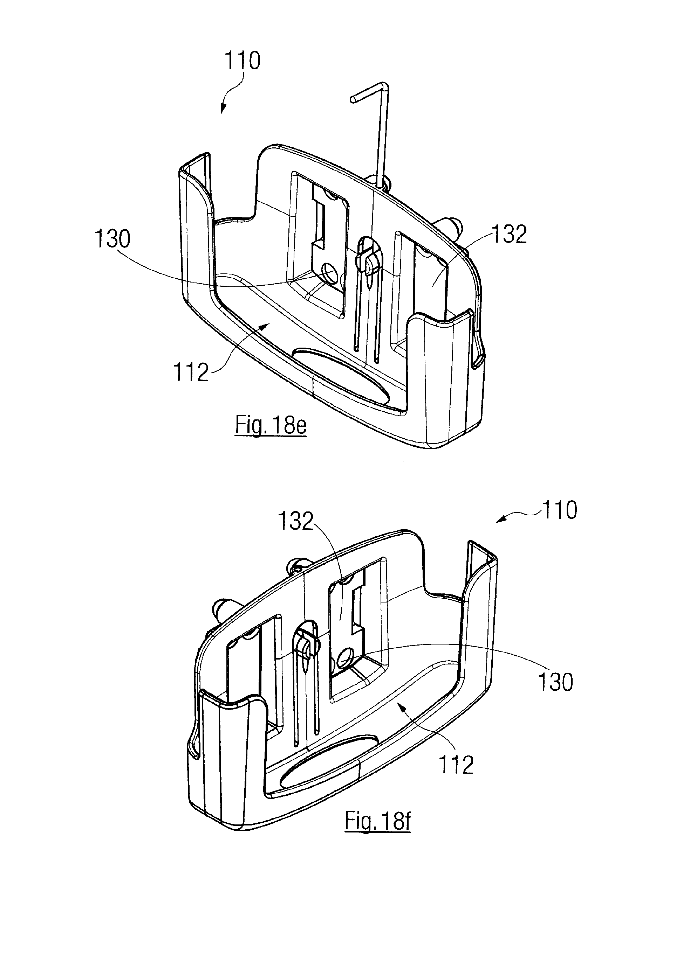

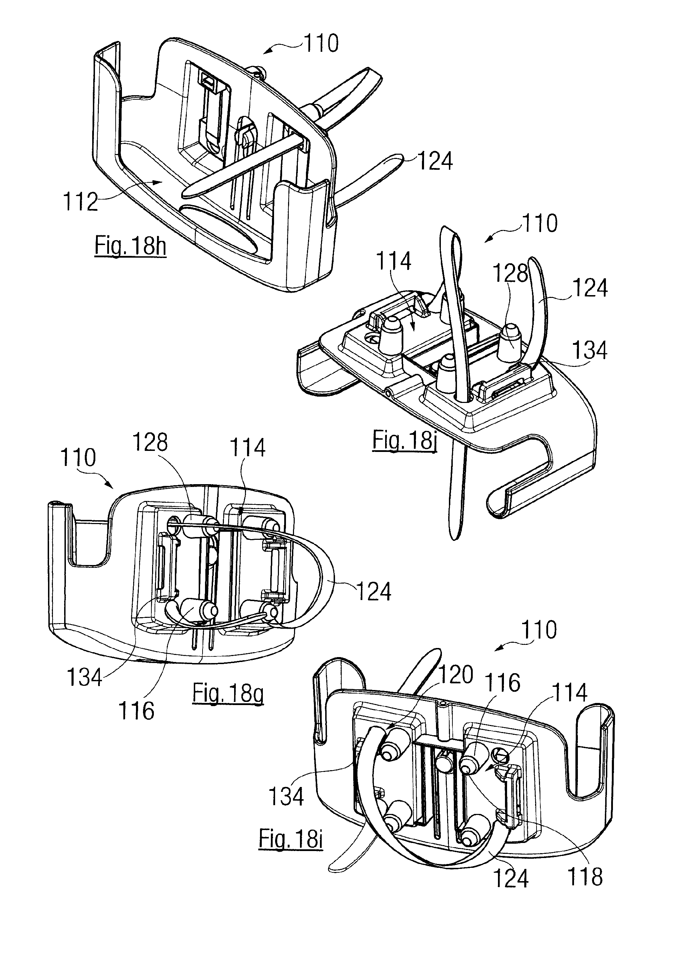

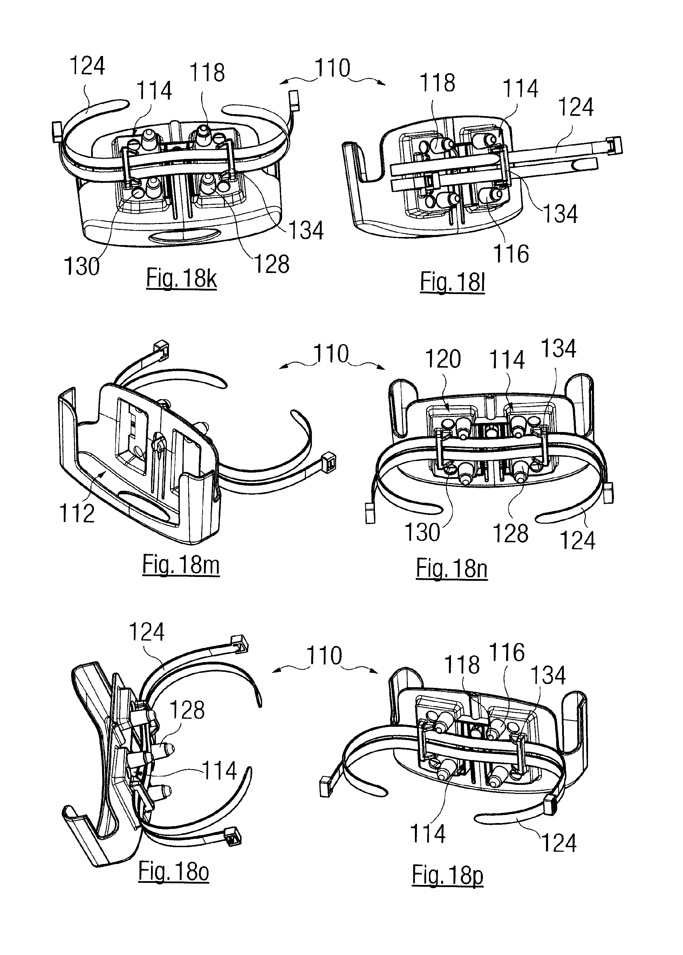

Wie dies in den Fig. 18a bis 18p ersichtlich ist, hat ein Befestigungsmittel 110 einen Haltebereich 112 und einen Befestigungsbereich 114. Der Haltebereich 112 ist in vertikaler Richtung oben offen, so dass die Pumpeinrichtung 16 von oben in den Befestigungsbereich 112 eingeführt werden kann. Die Innenabmessungen des Haltebereichs 112 sind an die Außenabmessungen der Pumpeinrichtung 16 angepasst, so dass die Pumpeinrichtung 16 in den Haltebereich 112 eingelegt werden kann, so dass die Pumpeinrichtung 16 sicher angeordnet werden kann.

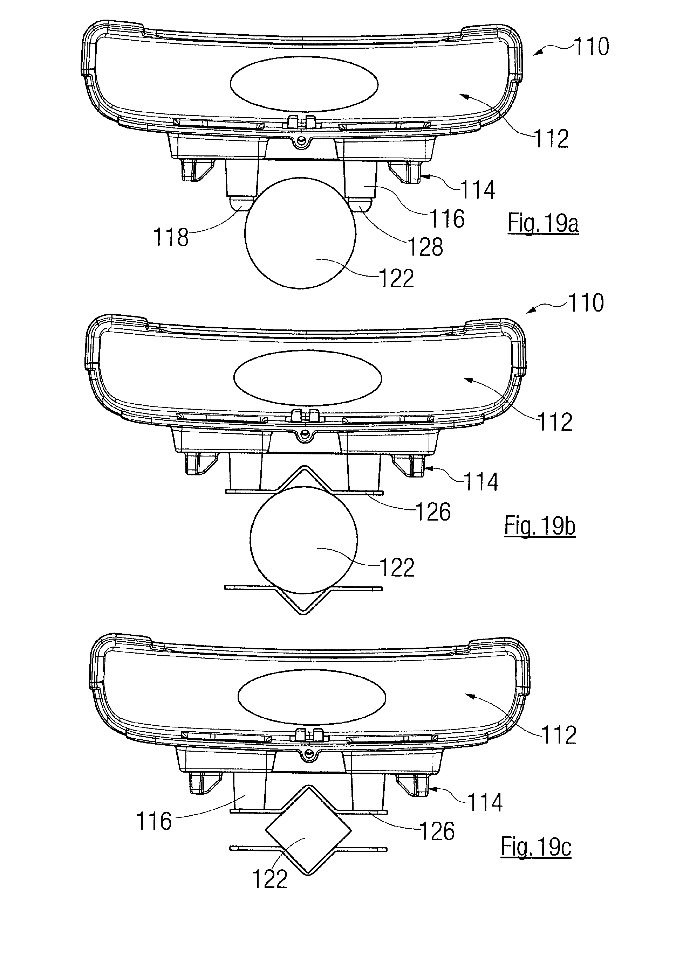

Der Befestigungsbereich 114 hat einen Grundabschnitt 116 und einen Kontaktabschnitt 118. Grundabschnitt 116 und Kontaktabschnitt 118 bilden einen Anlageabschnitt 120. Eine Stange 122 eines Geräts wird durch einen Fixierabschnitt 124 in Form eines Kabelbinders an den Anlageabschnitt 120 gepresst. Dazu weist der Befestigungsbereich 114 Löcher 130 auf, durch die der Fixierabschnitt 124 hindurch geführt werden kann. Der Anlageabschnitt 120 umfasst eine Anlagefläche 126, wie in den Figs. 19a bis 19c ersichtlich, oder als Anlagevorsprünge 128, wie in den Figs. 18a bis 18p und 19a ersichtlich. Die Anlagevorsprünge 128 sind als Gumminoppen ausgebildet. Je nach dem wie groß die Stange 122 ist, kann als Kontaktabschnitt 118 die Anlagefläche 126 oder die Anlagevorsprünge 128 in den Grundabschnitt 116 eingesteckt oder eingeschraubt werden. Durch Löcher 130 können die Fixierabschnitte 124 hindurchgeführt werden. Die Löcher 130 sind in Vertiefungen 132 des Haltebereichs 112 angeordnet, so dass auch besonders dicke Fixierabschnitte 124 verwendet werden können.

Die Vertiefungen 132 sind durch Verstärkungen 134 verstärkt, die auch eine Anlageabschnitt 120 bei horizontal angeordneten Stangen 122 bilden kann. Zudem bilden die Verstärkungen 134 einen Anlageabschnitt 120 zur Befestigung an vertikalen Stangen, wobei dieser insbesondere für Stangen mit großem Durchmesser geeignet ist. Die Verstärkungen 134 weisen zudem Öffnungen auf, durch die Fixierabschnitte 124 zur Fixierung hindurch geführt werden können. Mit Hilfe der Löcher 130 und der Verstärkungen 134 können die Fixierabschnitte 124 auf unterschiedliche Weise angebracht werden, um die Befestigung des Befestigungsmittels 110 an die vorliegende Situation anzupassen. Die verschiedenen Anbringungsmöglichkeiten der Fixierungsabschnitte 124 sind beispielhaft in Figs. 18a bis 18p dargestellt. Der Haltebereich 112 ist ferner so dimensioniert, dass er die Pumpeinrichtung 16 verspannungsfrei aufnehmen kann.

Der Ladevorrichtung 100 ist eine Anbringungseinrichtung 140 beigeordnet. Die Anbringungseinrichtung ist in der gezeigten Ausführungsform von Fig. 21 durch drei Ständer 142 bereitgestellt, die jeweils die Tragevorrichtung 12 oder den Druckgürtel 14 aufnehmen können. Dazu weist der Ständer 142 waagerechte Stangen 144 auf, über die die Tragevorrichtung 12 oder der Druckgürtel 14 gelegt werden kann.

**Bezugszeichenliste**

| | | | |
|---|---|---|---|
| 10 | Fitnessgerät | 56 | erster Anschlussbereich |
| 12 | Tragevorrichtung | 58 | Winkelstück |
| 14 | Druckgürtel | 60 | Grundkörper |
| 16 | Pumpeinrichtung | 62 | zweites Ende |
| 18 | Halterung | 63 | Flauschband |
| | | 63a | weiteres Flauschband |
| 20 | Gegenstand | 64 | Haltemittel |
| 22 | Beutel | 66 | Lasche |
| 24 | Deckel | 68 | erstes Ende |
| 26 | erste Druckkammer | 69 | Hakenband |
| 28 | zweite Druckkammer | | |
| | | 70 | erste Öffnung |
| 30 | erste Anschlusseinrichtung | 72 | zweite Öffnung |
| 32 | zweite Anschlusseinrichtung | 74 | Tasche |
| 34 | erste Leitung | 76 | Verschluss |
| 36 | zweite Leitung | 77 | Schalter |
| 38 | Verschweißung | 78 | Hakenstreifen |
| | | | |
| 40 | erster Endbereiche | 80 | Anschluss |
| 41 | Hakenbereich | 82 | Batterie |
| 42 | erster Basisabschnitt | 84 | Kompressor |
| 44 | erster Zeigabschnitt | 86a | erstes Ventil |
| 46 | zweiter Basisabschnitt | 86b | zweites Ventil |
| 48 | zweiter Zweigabschnitt | 87 | Rohr |
| 50 | zweiter Endbereich | 88 | Bodenteil |
| 51 | Flauschbereich | | |
| 52 | Schlauch | 90 | Verbindungsabschnitt |
| 54 | erstes Endstück | 92 | Platine |
| 93 | Halteklammer | 130 | Loch |
| 94 | Deckel | 132 | Vertiefung |
| 95 | Halterahmen | 134 | Verstärkung |
| 96 | Sensoreinrichtung | 140 | Anbringungseinrichtung |
| 97 | Ladezustandserkennungseinrichtung | 142 | Ständer |
| 98 | Benachrichtigungseinrichtung | 144 | waagerechte Stange |
| 99 | Steuereinrichtung | | |
| | | | |
| 100 | Ladevorrichtung | | |
| 102 | Einschubeinrichtung | | |
| 104 | Gegenkontaktbereich | | |
| 105 | Kontaktfläche | | |
| 106 | Kontaktbereich | | |
| 107 | Kontaktstift | | |
| 108 | Erkennungseinrichtung | | |
| 109 | Sicherungseinrichtung | | |
| | | | |
| 110 | Befestigungsmittel | | |
| 112 | Haltebereich | | |
| 114 | Befestigungsbereich | | |
| 116 | Grundabschnitt | | |
| 118 | Kontaktabschnitt | | |
| | | | |
| 120 | Anlageabschnitt | | |
| 122 | Stange | | |
| 124 | Fixierabschnitt | | |
| 126 | Anlageflächen | | |
| 128 | Anlagevorsprung | | |

## Patentansprüche

1. Fitnessgerät zur Intensivierung der Fettverbrennung in einem Körperteil einer Person durch die Anregung der Durchblutung in diesem Körperteil, umfassend:
einen Druckgürtel (14) zur Beaufschlagung des Körperteils mit Druck, der geeignet ist, eng an dem Körperteil anzuliegen, und wenigstens eine mit einem Fluid beaufschlagbare und mit einer abgewinkelten Anschlusseinrichtung (30, 32) versehene Druckkammer (26, 28) aufweist;
eine Pumpeinrichtung (16), die geeignet ist, die Druckkammer (26, 28) mit dem Fluid zu beaufschlagen;
wenigstens eine die Druckkammer (26, 28) und die Pumpeinrichtung (16) miteinander verbindende Leitung (34, 36), die mittels eines fluiddichten Schnellverschlusses (54, 56) lösbar mit der Anschlusseinrichtung (30, 32) verbunden ist, und
eine Tragevorrichtung (10) zum Tragen der Pumpeinrichtung (16) an dem Körperteil, die geeignet ist, über dem Druckgürtel (14) angeordnet zu werden;
wobei die Tragevorrichtung (10) umfasst:
einen Grundkörper (60), der ein erstes Ende (68) und ein zweites Ende (62) sowie eine dem Körperteil zugewandte Innenseite und eine dem Körperteil abgewandte Außenseite aufweist;
ein Verbindungsmittel, das geeignet ist, das erste Ende (68) und das zweite Ende (62) so miteinander zu verbinden, dass das Körperteil umschlossen wird, und
ein Haltemittel (64) zum lösbaren Befestigen der Pumpeinrichtung (16) an dem Grundkörper (60).

2. Fitnessgerät nach Anspruch 1, **dadurch gekennzeichnet, dass** das Haltemittel (64) auf der Innenseite angeordnet ist und vorzugsweise als eine verschließbare Tasche (74) ausgebildet ist.

3. Fitnessgerät nach Anspruch 2, **dadurch gekennzeichnet, dass** das Haltemittel (64) eine erste Öffnung (70) und eine zweite Öffnung (72), die vorzugsweise der ersten Öffnung (70) gegenüberliegend angeordnet ist, aufweist.

4. Fitnessgerät nach einem der Ansprüche 1 bis 3, **dadurch gekennzeichnet, dass** der Grundkörper (60) an der Innenseite wenigstens eine Lasche (66) zum Halten der Leitung (34) aufweist.

5. Fitnessgerät nach einem der Ansprüche 1 bis 4, **dadurch gekennzeichnet, dass** der Grundkörper (60), und/oder das Haltemittel (64) und/oder die Lasche (66) aus einem textilen, insbesondere atmungsaktiven, Material gefertigt sind, das vorzugsweise elastisch ist und weiter vorzugsweise Neopren umfasst.

6. Fitnessgerät nach einem der Ansprüche 1 bis 5, **dadurch gekennzeichnet, dass** das Verbindungsmittel ein Hakenband (69), das an der Innenseite im Bereich des ersten Endes (68) angeordnet ist, und ein Flauschband (63), das an der Außenseite im Bereich des zweiten Endes (62) angeordnet ist, aufweist, wobei zum Verbinden des ersten Endes (68) und des zweiten Endes (62) das Hakenband (69) mit dem Flauschband (63) in Eingriff bringbar ist.

7. Fitnessgerät nach einem der Ansprüche 1 bis 6, **dadurch gekennzeichnet, dass** der Grundkörper (60) an der Außenseite zumindest bereichsweise mit einem weiteren Flauschband (63a) versehen ist.

8. Fitnessgerät nach einem der Ansprüche 1 bis 7, **gekennzeichnet durch** eine Halterung (18) zum Befestigen eines Gegenstands (20), insbesondere einer Medienwiedergabeeinrichtung, an dem Grundkörper (60), wobei vorzugsweise die Halterung (18) aus einem textilen, insbesondere elastischen, Material gefertigt ist, das vorzugsweise Neopren umfasst.

9. Fitnessgerät nach Anspruch 8, **dadurch gekennzeichnet, dass** die Halterung (18) lösbar an dem Grundkörper (60) befestigt ist, wobei vorzugsweise die Halterung (18) ein zweites Hakenband zur lösbaren Befestigung an dem Flauschband (63) und/oder dem weiteren Flauschband (63a) der Tragevorrichtung (12) aufweist.

10. Fitnessgerät nach einem der Ansprüche 1 bis 9, **gekennzeichnet durch** eine Steuerungseinrichtung zum Steuern der Pumpeinrichtung (16).

11. Fitnessgerät nach einem der Ansprüche 1 bis 10, **dadurch gekennzeichnet, dass** der Druckgürtel (14) umfasst:
eine erste Druckkammer (26) und eine zweite Druckkammer (28);
eine erste Anschlusseinrichtung (33), die einen Anschlussbereich (56) aufweist und mit der ersten Druckkammer (26) verbunden ist;
eine zweite Anschlusseinrichtung (32), die einen Anschlussbereich (56) aufweist und mit der zweiten Druckkammer (28) verbunden ist;
eine erste Leitung (34), welche die erste Druckkammer (26) mit der Pumpeinrichtung (16) verbindet und ein Endstück (54) hat,
eine zweite Leitung (36), welche die zweite Druckkammer (28) mit der Pumpeinrichtung (16) verbindet und ein Endstück (54) hat;
wobei der Anschlussbereich (56) und das Endstück (54) einen fluiddichten Schnellverschluss bilden und
wobei die erste Anschlusseinrichtung (30) und die zweite Anschlusseinrichtung (32) jeweils abgewinkelt sind.

12. Fitnessgerät nach Anspruch 11, **dadurch gekennzeichnet, dass** die erste Anschlusseinrichtung (30) und/oder die zweite Anschlusseinrichtung (32) im Wesentlichen um 90° abgewinkelt sind.

13. Fitnessgerät nach einem der Ansprüche 1 bis 12, **dadurch gekennzeichnet, dass** der Druckgürtel (14) einen ersten Endbereich (40), einen zweiten Endbereich (50) und einen Verschluss, mittels dem der erste Endbereich (40) und der zweite Endbereich (50) verbindbar sind, aufweist, wobei vorzugsweise der Verschluss als eine lösbare Verbindung und weiter vorzugsweise als ein Klettverschluss und/oder als eine Steckverschluss und/oder in Form wenigstens eines Druckknopfs ausgebildet ist.

14. Fitnessgerät nach einem der Ansprüche 11 bis 13, **dadurch gekennzeichnet, dass**
die erste Druckkammer (26) einen ersten Basisabschnitt (42), der sich im Wesentlichen linear erstreckt, und wenigstens zwei erste Zweigabschnitte (44), die von dem ersten Basisabschnitt (42) abzweigen, aufweist,
die zweite Druckkammer (28) einen zweiten Basisabschnitt (46), der sich im Wesentlichen linear erstreckt, und wenigstens zwei zweite Zweigabschnitte (48), die von dem zweiten Basisabschnitt (46) abzweigen, aufweist,
und vorzugsweise die zweiten Zweigabschnitte (48) jeweils zwischen den ersten Zweigabschnitten (44) angeordnet sind.

15. Fitnessgerät nach einem der Ansprüche 11 bis 14, **dadurch gekennzeichnet, dass** die erste Druckkammer (26) und/oder die zweite Druckkammer (28) aus zwei Lagen gefertigt sind, die vorzugsweise zur Trennung der ersten Druckkammer (26) und der zweiten Druckkammer (28) miteinander verschweißt sind.

16. Fitnessgerät nach einem der Ansprüche 1 bis 15, **dadurch gekennzeichnet, dass** die Pumpeinrichtung (16) eine Sensoreinrichtung (96) aufweist, die den Druck des Fluids in der Leitung (34, 36) misst.

17. Fitnessgerät nach einem der Ansprüche 1 bis 16, **dadurch gekennzeichnet, dass** die Pumpeinrichtung (16) eine, insbesondere wiederaufladbare, Batterie (82) und eine Ladezustandserkennungseinrichtung (97) aufweist, wobei die Ladezustandserkennungseinrichtung (97) den Ladezustand der Batterie (82) detektiert und vorzugsweise eine Benachrichtigungseinrichtung (98) zur Ausgabe einer Benachrichtigung, insbesondere eines Geräuschs, aufweist.
